(19) Europäisches Patentamt
European Patent Office
Office européen des brevets

(11) EP 3 798 881 B1

# (12) EUROPEAN PATENT SPECIFICATION

(45) Date of publication and mention of the grant of the patent:
**23.09.2026 Bulletin 2026/39**

(21) Application number: **20180412.7**

(22) Date of filing: **17.06.2020**

(51) International Patent Classification (IPC):
***G06F 21/55*** ***(2013.01)*** ***G06F 21/71*** ***(2013.01)***
***G06F 9/38*** ***(2018.01)*** ***G06F 9/30*** ***(2018.01)***

(52) Cooperative Patent Classification (CPC):
**G06F 21/556; G06F 9/30072; G06F 9/30076; G06F 9/30185; G06F 9/34; G06F 9/3842; G06F 21/71; H04W 12/63**

(54) **HARDWARE FOR ELIDING SECURITY CHECKS WHEN DEEMED SAFE DURING SPECULATIVE EXECUTION**

HARDWARE ZUR AUSLASSUNG VON SICHERHEITSPRÜFUNGEN, WENN SIE WÄHREND DER SPEKULATIVEN AUSFÜHRUNG ALS SICHER ERACHTET WERDEN

MATÉRIEL PERMETTANT D’ÉLUDER LES CONTRÔLES DE SÉCURITÉ LORSQU’ILS SONT JUGÉS SÛRS PENDANT UNE EXÉCUTION SPÉCULATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.09.2019 US 201916585964**

(43) Date of publication of application:
**31.03.2021 Bulletin 2021/13**

(73) Proprietor: **INTEL Corporation**
**Santa Clara, CA 95054 (US)**

(72) Inventor: **LeMay, Michael**
**Hilsboro, OR Oregon 97123 (US)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2019/140274** **US-A1- 2009 089 564**
**US-A1- 2016 132 337** **US-A1- 2019 205 140**

- **VLADIMIR KIRIANSKY ET AL: "Speculative Buffer Overflows: Attacks and Defenses", ARXIV.ORG, CORNELL UNIVERSITY LIBRARY, 201 OLIN LIBRARY CORNELL UNIVERSITY ITHACA, NY 14853, 10 July 2018 (2018-07-10), XP081115419**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a micro-instruction, e.g., an instruction that results from a processor's decoder decoding macro-instructions.

WO 2019/140274 A1 refers to protecting a computer application from being exploited by an attacker, while the application code is executed by a speculative execution engine having vulnerabilities. Prior to execution of the application by a speculative execution engine, a system locates a sequence of instructions of the application in which the speculative execution engine executes the instructions out of sequence. The system determines a disposition that forces the speculative execution engine to execute the instructions in sequence. The disposition may be adding a fence instruction to the sequence of instructions. During execution of the application code by the speculative execution engine, the system changes the sequence of instructions based on the disposition. The system executes the changed sequence of instructions in place of the located sequence of instructions to prevent an attack on the application.

US 2016/132337 A1 discloses an approach for providing robust speculative code section abort control mechanisms. Hardware is able to track speculative code region abort events, conditions, and/or scenarios, such as an explicit abort instruction, a data conflict, a speculative timer expiration, a disallowed instruction attribute or type, etc. The hardware makes an abort determination based on the tracked abort events. The hardware may make an initial abort determination based on one or more predefined events or choose to pass the event information up to a firmware or software handler to make such an abort determination. Upon determining an abort of a speculative code region is to be performed, the hardware performs the abort, which may include following a fallback path specified by hardware or software. And to enable testing of such a fallback path, in one implementation, hardware provides software a mechanism to always abort speculative code regions.

The invention is defined by an apparatus and a method according to the independent claims. Preferred embodiments are defined in the dependent claims.

## BRIEF DESCRIPTION OF DRAWINGS

Various embodiments in accordance with the present disclosure will be described with reference to the drawings, in which:

**Figure 1** illustrates a computer system including a processor core according to embodiments of the disclosure.

**Figure 2** illustrates a flow diagram for eliding a security check instruction according to embodiments of the disclosure.

**Figure 3** illustrates a flow diagram for emitting a hint into code according to embodiments of the disclosure.

**Figure 4** illustrates a flow diagram according to embodiments of the disclosure.

**Figure 5A** is a block diagram illustrating a generic vector friendly instruction format and class A instruction templates thereof according to embodiments of the disclosure.

**Figure 5B** is a block diagram illustrating the generic vector friendly instruction format and class B instruction templates thereof according to embodiments of the disclosure.

**Figure 6A** is a block diagram illustrating fields for the generic vector friendly instruction formats in Figures 5A and 5B according to embodiments of the disclosure.

**Figure 6B** is a block diagram illustrating the fields of the specific vector friendly instruction format in Figure 6A that make up a full opcode field according to one embodiment of the disclosure.

**Figure 6C** is a block diagram illustrating the fields of the specific vector friendly instruction format in Figure 6A that make up a register index field according to one embodiment of the disclosure.

**Figure 6D** is a block diagram illustrating the fields of the specific vector friendly instruction format in Figure 6A that make up the augmentation operation field 550 according to one embodiment of the disclosure.

**Figure 7** is a block diagram of a register architecture according to one embodiment of the disclosure

**Figure 8A** is a block diagram illustrating both an exemplary in-order pipeline and an exemplary register renaming, out-of-order issue/execution pipeline according to embodiments of the disclosure.

**Figure 8B** is a block diagram illustrating both an exemplary embodiment of an in-order architecture core and an exemplary register renaming, out-of-order issue/execution architecture core to be included in a processor according to embodiments of the disclosure.

**Figure 9A** is a block diagram of a single processor core, along with its connection to the on-die interconnect network

and with its local subset of the Level 2 (L2) cache, according to embodiments of the disclosure.

**Figure 9B** is an expanded view of part of the processor core in Figure 9A according to embodiments of the disclosure.

**Figure 10** is a block diagram of a processor that may have more than one core, may have an integrated memory controller, and may have integrated graphics according to embodiments of the disclosure.

**Figure 11** is a block diagram of a system in accordance with one embodiment of the present disclosure.

**Figure 12** is a block diagram of a more specific exemplary system in accordance with an embodiment of the present disclosure.

**Figure 13,** shown is a block diagram of a second more specific exemplary system in accordance with an embodiment of the present disclosure.

**Figure 14,** shown is a block diagram of a system on a chip (SoC) in accordance with an embodiment of the present disclosure.

**Figure 15** is a block diagram contrasting the use of a software instruction converter to convert binary instructions in a source instruction set to binary instructions in a target instruction set according to embodiments of the disclosure.

## DETAILED DESCRIPTION

In the following description, numerous specific details are set forth. However, it is understood that embodiments of the disclosure may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

A (e.g., hardware) processor (e.g., having one or more cores) may execute instructions (e.g., a thread of instructions) to operate on data, for example, to perform arithmetic, logic, or other functions. For example, software may request an operation and a hardware processor (e.g., a core or cores thereof) may perform the operation in response to the request. The software may include one or more branches (e.g., branch instructions) that cause the execution of a different instructions sequence than in program order. A branch instruction may be an unconditional branch, which always results in branching, or a conditional branch, which may or may not cause branching depending on some condition(s). Certain processors are pipelined to allow more instructions to be completed faster. This generally means that instructions do not wait for the previous ones to complete before their (e.g., speculative) execution begins. A problem with this approach arises, however, due to conditional branches. Particularly, when the processor encounters a conditional branch and the result for the condition has not yet been calculated, it does not know whether to take the branch or not. Branch prediction is what certain processors use to decide whether to take a conditional branch or not. Getting this information as accurately as possible is important, as an incorrect prediction (e.g., a mis-predict) will cause certain processors to throw out all the instructions that did not need to be executed and start over with the correct set of instructions, e.g., with this process being particularly expensive with deeply pipelined processors. In one embodiment, a branch predictor of a processor aggressively speculates and gains significant performance, e.g., with an increasing out-of-order depth and width.

In certain embodiments, code to be executed by a hardware processor that supports speculative execution (e.g., including branch prediction) includes one or more security checks (e.g., security check instructions). Certain security checks (e.g., to enforce memory safety checks or type safety checks) may be elided (e.g., by a compiler) using static analysis, but that analysis should be extended to take speculative execution into consideration. To enforce the desired security policy on all possible paths of execution, including mis-speculated ones, additional security checks may be needed. However, mis-speculation is a rare occurrence in certain embodiments, so those security checks would impose additional overhead that would typically be unnecessary in those embodiments.

In certain embodiments, memory safety checks are to check for memory access errors, e.g., for buffer overflows and dangling pointers. In one embodiment, a memory safety check is to check array bounds and pointer dereferences.

In certain embodiments, type safety checks are to check (e.g., for a memory access request) for discrepancy between differing data types for the program's constants, variables, and methods (e.g., functions), for example, the error of treating data that is an integer (int) as a floating-point number (float).

Certain embodiments herein extend a processor's architecture to read hints (e.g., emitted by a compiler) that particular security checks are only needed when the operations being checked may potentially be mis-speculated. When the processor determines the operations are not deemed safe, the checks can be performed and speculation can continue, which increases optimization opportunities. On the other hand, when the processor determines that such an operation is safe by the time it is ready to execute, then the associated security checks can be skipped to reduce overhead in these embodiments. Certain embodiments herein provide a way to specify that security checks should only be performed if an

instruction may be mis-speculated. Future compilers will likely increase the quantity of security check instructions that they emit so that checks enforce (e.g.., type) safety on potential speculative control flows. Certain embodiments herein provide an efficiency advantage in that case by conveying information (e.g., from the compiler) to the microarchitecture about which security checks can be skipped on control flows that are known to be correctly predicted/architectural.

Fences can be used to restrict speculative execution of operations that are restricted by a preceding security check until that check has completed. Unlike the embodiments herein for security check elision in speculative execution, fences may also restrict speculative execution of operations that are not dependent on the security check, and thus limit the ability of the processor to optimize performance.

In certain embodiments, a strategy to defend against hardware speculation attacks in hardware processors is by making speculation invisible in the data cache hierarchy, e.g., to more precisely determine when loads can safely proceed without affecting microarchitectural state in a way that may leak information, and buffering state changes prior to the point to permit speculative execution to continue. In one embodiment, the strategy blocks micro-architectural covert and side channels through the multiprocessor data cache hierarchy due to speculative loads, e.g., such that unsafe speculative loads read data into a speculative buffer, without modifying the cache hierarchy. When the loads become safe, this strategy makes them visible to the rest of the system. This strategy identifies loads that might have violated memory consistency and, at this time, forces them to perform a validation step. Unlike the embodiments herein for security check elision in speculative execution, the strategy above is overly pessimistic in determining when loads can safely proceed if a developer is only interested in enforcing a looser security policy (such as memory-safety or type-safety) rather than the stricter full conformance check for an architectural specification of cache access visibility that the strategy enforces. This strategy also increases the demand for buffer space. The buffering logic also introduces additional overhead and complexity, especially since the strategy re-issues buffered loads when they are finally permitted to proceed. The embodiments herein for security check elision in speculative execution enables use of security checks (e.g., as inserted by a compiler) to enforce a particular security policy desired by the developer, and those checks can themselves be executed speculatively to declare operations (e.g., loads) safe earlier than would be the case without those checks. Note that buffering can be used with the embodiments herein for security check elision in speculative execution.

The embodiments herein for security check elision in speculative execution define new types of instructions (and modifiers to previously-defined instructions) that include security instrumentation that enforces the security policy desired by the developer while still enabling significant dynamic optimization. For example, it enables a bounds-checking instruction (e.g., a capability to pointer instruction or a memory protection extension (MPX) bounds check instruction (e.g., to check the low or high bounds)) or a set of implicit bounds and type checks to be marked as needed only if a load from the address being checked would be deemed unsafe. When the processor reaches that instruction, it can skip it if the safety criteria (e.g., that the correct directions of preceding branches have been determined) have already been satisfied. In certain embodiments, a capability in this context refers to a pointer with associated security metadata embedded within the pointer storage.

Type safe languages may be used by developers to avoid common security problems in their programs that could result in data leakage. In certain embodiments, memory safety is not as strict (e.g., it does not prevent type confusion), but it may impose less overhead to enforce. The embodiments herein for security check elision in speculative execution provide a way to more efficiently enforce a proper subset of security policies (e.g., memory-safety and/or type-safety) along both architectural and mis-speculated paths of execution by using a hint (e.g., provided by a compiler) to inform processors of what security checks are needed only on control flows that may be mis-speculated. In certain embodiments, hints are visible in the code for a program to indicate the checks that are only needed for potentially mis-speculated instructions.

A fundamental idea underlying the embodiments herein for security check elision in speculative execution is that some programs only need to enforce a proper subset (e.g., less than all) (e.g., a memory safety and/or type safety policy) of policies rather than full conformance to the architectural specification of the processor running the program, and that provides opportunities for a greater degree of speculative execution than would be possible for a given set of processor resources if a stricter policy were enforced.

Thus, one aspect of the embodiments herein for security check elision in speculative execution is to gate speculative execution using certain narrow types of security checks such as bounds checks and type checks rather than requiring full architectural conformance. This can be realized by preventing adversary-visible microarchitectural state changes induced by a security-sensitive operation (e.g., a memory load) from occurring prior to relevant checks completing (e.g., a capability to pointer check, MPX check, or other defined checks). For example, this can take the form of blocking further speculative execution until checks complete or buffering the resultant state changes and rolling them back if the checks fail.

Secondly, this implies that more security checks may be needed to cover possible mis-speculated control flows, whereas previously a compiler may have statically elided checks on flows that are architecturally impossible. This requires certain embodiments of a compiler to have a model of speculative execution so that it can identify all possible speculative control flows.

Thirdly, for reasons of efficiency, certain embodiments of a compiler should be able to inform the processor about

which security checks have been added that would have otherwise been elided so that the processor can skip those checks when the values being checked conform to their architectural definitions. Skipping those checks (e.g., skipping dispatching of those checks to an execution unit) saves energy, bandwidth, and other resources of a processor and is thus an improvement to a processor (e.g., a computer including the processor).

The following elaborates on this third aspect. The embodiments herein for security check elision in speculative execution enable use of hints (e.g., provided by a compiler) by the processor about which security checks are needed only when the operation being restricted by the check has not yet been deemed safe in some other way. For example, consider the following sample pseudocode:

```
// A networking application with a sockets library supporting multiple socket
types.  TCP/IP sockets are represented by a larger structure than the one for
local domain sockets.  This can create an opportunity for type confusion in
```

which a small socket structure is accessed as though it is a larger structure. If an SSL key happens to be stored immediately after the small socket structure, this could result in the key information being leaked out.

```
class Socket {

};


// a smaller structure to represent local domain sockets

__attribute__((packed))

class LocalDomainSocket : Socket {

  uint8_t *path;

};

// an enumeration of possible socket states

enum SocketState {

  invalid, closed, waiting, connected

};

// a larger structure to represent IP sockets

class TCPIPSocket : Socket {

  uint8_t ip[4];

  uint16_t port;

  // assume that each field is aligned to a 32-bit boundary, so stt protrudes past
where the LocalDomainSocket struct would end

  SocketState stt;

};


Socket *lookupSocket(int id) {
```

```
  // socket initialization omitted for brevity
  static Socket *sockets[] = { new LocalDomainSocket(), new TCPIPSocket()
};
return sockets[id];
}
struct Service {
  // the definition of Listener is unimportant for this example
  Listener *listener;
  char name[56]; // this is selected to make the size of Service match the size of
a cacheline for illustrative purposes
};
static Service tcpipServices[65536];
static Service domainServices[128];
// The following routine checks whether a service is registered as a listener at
the specified address:
Listener *lookupListener(Socket *socket) {
  if (TCPIPSocket *ts = dynamic_cast<TCPIPSocket>(socket)) {
return tcpipServices[socket->port];
  } else {
    LocalDomainSocket *ds = static_cast<LocalDomainSocket>(socket);
    // details of lookup for local domain socket omitted, since they are irrelevant
  }
}
int networkProcessingLoop() {
  Socket *socket = NULL;
```

```
    // … code that results in a socket being established, initializing the socket
   variable …
    Listener *listener = lookupListener(socket);
    // … code for satisfying the incoming network request …
    return 0;
    }
```

In certain embodiments, the bounds check for the following access should be performed unconditionally, since any value of "id" can be provided to this function (excluding the possibility of inlining for this example). Type-checking may not be needed, since the compiler can statically verify the type-safety of this access, assuming that the address of sockets is never speculated by the processor. Otherwise, if that level of speculation is possible, a dynamic type-safety check may enable speculation to proceed further while still ensuring that type-safety is enforced.

Note, however, that even if address speculation is possible, the compiler can statically determine that the type-safety check is unneeded if the address of sockets matches its architectural definition in certain embodiments. This latter condition is satisfied if the processor (e.g., central processing unit (CPU)) has already resolved any conditions or retired any instructions that may have potentially caused the address of sockets to deviate from its architectural definition (e.g., be mis-speculated), such as preceding branches or preceding stores that may alias to the memory location from which the address of sockets was loaded, if applicable.

The embodiments herein for security check elision in speculative execution enables the compiler to pass a hint to the processor indicating that the type-safety check can be elided if the address input to the following access has already been determined to be architectural by the processor (e.g., CPU) at the point that the access is ready to execute.

In one embodiment, the dynamic_cast routine in the above pseudocode accepts a template parameter specifying the type of the pointer that the parameter is being cast into. It performs a dynamic check to determine whether the type of the input parameter is a sub-class of the template parameter or whether they match exactly. If so, the result of the routine is a pointer to an object of the new type with the same address as the input pointer. Otherwise, dynamic_cast returns null.

As one example, this "if" statement causes the compiler to generate branch instructions to implement the conditional control flows. If previous branches have resolved by the time the instructions in this branch of the if statement execute, then the type check has passed. That implies that the subsequent access to ts->port will also be within the bounds of ts. Thus, a hint could be supplied to this ts->port access indicating that type and bounds check(s) (e.g., bounds check instruction(s)) can be elided if the address being accessed is already known to match its architectural definition and all preceding branches have already resolved. Note that this is a stronger restriction than was specified for the access generated from last statement in lookupSocket. Multiple types of hints can be defined (e.g., different instruction prefixes or different instruction variants) for each type of restriction.

As another example for the above pseudocode, if the branch is mispredicted so that a LocalDomainSocket is accessed as though it were a TCPIPSocket, then the sixteen bits of data stored just past the end of the LocalDomainSocket object will be used to index into the tcpipServices array. If that happens to be where some sensitive data is stored, e.g., part of the private key for the server, then that information could determine which entry in the tcpipServices array gets pulled into the cache, assuming that the entire array is initially uncached. If an adversary is able to time subsequent accesses to the tcpipServices array, e.g., by attempting to connect to each service and timing how long it takes for the connection to be established, that may leak the sensitive data value. The service that connects most quickly may be the one with its port number equal to the sensitive data. Cryptographic keys may be larger than the example sixteen bits, but leaking any of the private key is potentially problematic. There may also be more complex scenarios than the one described in this example that could result in more of the key leaking.

If the access is ready to execute, but it has not yet been deemed safe by the criteria defined above, bounds and type checks could be performed. Both bounds and type checks would fail in this case if the branch is mis-speculated, but in other cases just one variety of check may fail.

It may be useful in some cases to distinguish between pointers to the beginnings of objects and pointers to other offsets within objects, so that dynamic bounds checks can be performed on accesses using the latter subtype of pointer even if static checks would have otherwise sufficed if the pointer was to the base of the object. It may enhance efficiency to specify in a pointer representation whether the pointer points to the beginning of an object or not. For example, a reserved bit in the pointer could be set when the pointer (or fat pointer) is initialized to the object base, and subsequent pointer

updates could update that bit depending on whether the resultant pointer points to the object base.

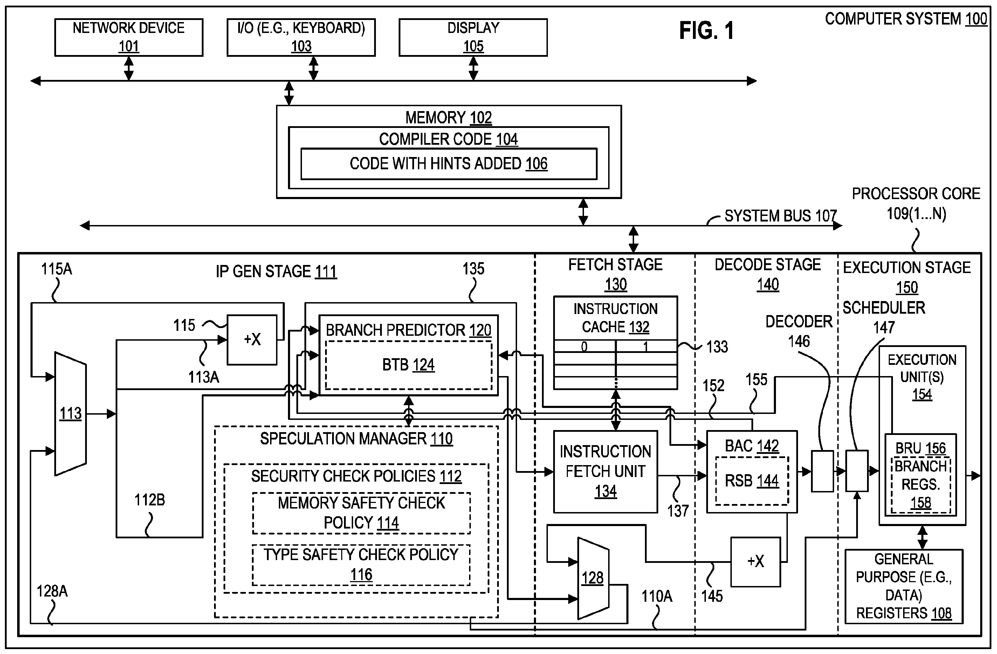

**Figure 1** illustrates a computer system 100 including a processor core 109 according to embodiments of the disclosure. Processor core 109 may include a speculation manager 110 to manage control of the speculation features discussed herein. Scheduler 147 may include a speculation manager 110 that includes the security check elision in speculative execution functionality as discussed herein. In certain embodiments, speculation manager 110 includes security check policies 112 to store one or more of associated checks to be performed for a particular security check policy. For example, a first security check policy may be a memory safety check policy 114 and a second security check policy may be a type safety check policy 116. In certain embodiments, speculation manager 110 is to access code (e.g., code with hints added 106) (e.g., an instruction with a hint added, or the decoded instruction of that instruction, from code 106) to determine which policy applies, and then determine if it is safe or not safe to elide the one or more associated checks. In one embodiment, speculation manager 110 includes a path 110A to a scheduler 147 of the core 109, e.g., to stop scheduling (and thus stop execution) of an instruction (e.g., microcode) that is to be elided. Path 110A may allow one-way communication or two-way communication. In one embodiment, scheduler 147 is to schedule execution of an instruction (e.g., microcode) on one or more of execution units 154.

Depicted computer system 100 includes a branch predictor 120 and a branch address calculator 142 (BAC) in a pipelined processor core 109(1)-109(N) according to embodiments of the disclosure. Referring to Figure 1, a pipelined processor core (e.g., 109(1)) includes an instruction pointer generation (IP Gen) stage 111, a fetch stage 130, a decode stage 140, and an execution stage 150. In certain embodiments, a retirement stage (e.g., including a re-order buffer (ROB)) follows execution stage 150. In one embodiment, computer system (e.g., processor) 100 includes multiple cores 109(1-N), where N is any positive integer. In another embodiment, computer system (e.g., processor) 100 includes a single core. In certain embodiments, each processor core 109(1-N) instance supports multithreading (e.g., executing two or more parallel sets of operations or threads on a first and second logical core), and may do so in a variety of ways including time sliced multithreading, simultaneous multithreading (e.g., where a single physical core provides a logical core for each of the threads that physical core is simultaneously multithreading), or a combination thereof (e.g., time sliced fetching and decoding and simultaneous multithreading thereafter). In the depicted embodiment, each single processor core 109(1) to 109(N) includes an instance of branch predictor 120. Branch predictor 120 may include a branch target buffer (BTB) 124.

In certain embodiments, branch target buffer 124 stores (e.g., in a branch predictor array) the predicted target instruction corresponding to each of a plurality of branch instructions (e.g., branch instructions of a section of code that has been executed multiple times). In the depicted embodiment, a branch address calculator (BAC) 142 is included which accesses (e.g., includes) a return stack buffer 144 (RSB). In certain embodiments, return stack buffer 144 is to store (e.g., in a stack data structure of last data in is the first data out (LIFO)) the return addresses of any CALL instructions (e.g., that push their return address on the stack).

Branch address calculator (BAC) 142 is used to calculate addresses for certain types of branch instructions and/or to verify branch predictions made by a branch predictor (e.g., BTB). In certain embodiments, the branch address calculator performs branch target and/or next sequential linear address computations. In certain embodiments, the branch address calculator performs static predictions on branches based on the address calculations.

In certain embodiments, the branch address calculator 142 contains a return stack buffer 144 to keep track of the return addresses of the CALL instructions. In one embodiment, the branch address calculator attempts to correct any improper prediction made by the branch predictor 120 to reduce branch misprediction penalties. As one example, the branch address calculator verifies branch prediction for those branches whose target can be determined solely from the branch instruction and instruction pointer.

In certain embodiments, the branch address calculator 142 maintains the return stack buffer 144 utilized as a branch prediction mechanism for determining the target address of return instructions, e.g., where the return stack buffer operates by monitoring all "call subroutine" and "return from subroutine" branch instructions. In one embodiment, when the branch address calculator detects a "call subroutine" branch instruction, the branch address calculator pushes the address of the next instruction onto the return stack buffer, e.g., with a top of stack pointer marking the top of the return stack buffer. By pushing the address immediately following each "call subroutine" instruction onto the return stack buffer, the return stack buffer contains a stack of return addresses in this embodiment. When the branch address calculator later detects a "return from subroutine" branch instruction, the branch address calculator pops the top return address off of the return stack buffer, e.g., to verify the return address predicted by the branch predictor 120. In one embodiment, for a direct branch type, the branch address calculator is to (e.g., always) predict taken for a conditional branch, for example, and if the branch predictor does not predict taken for the direct branch, the branch address calculator overrides the branch predictor's missed prediction or improper prediction.

The core 109 in Figure 1 includes circuitry to validate branch predictions made by the branch predictor 120. Each branch predictor 120 entry (e.g., in BTB 124) may further includes a valid field and a bundle address (BA) field which are used to increase the accuracy and validate branch predictions performed by the branch predictor 120, as is discussed in more detail below. In one embodiment, the valid field and the BA field each consist of one bit fields. In other embodiments, however, the size of the valid and BA fields may vary. In one embodiment, a fetched instruction is sent (e.g., by BAC 142

from line 137) to the decoder 146 to be decoded, and the decoded instruction is sent to the scheduler 147, to schedule execution on one or more of the execution units 154.

Depicted computer system 100 includes a network device 101, input/output (I/O) circuit 103 (e.g., keyboard), display 105, and a system bus (e.g., interconnect) 107.

In one embodiment, the branch instructions stored in the branch predictor 120 are pre-selected by a compiler as branch instructions that will be taken. In certain embodiments, the compiler code 104, as shown stored in the memory 102 of Figure 1, includes a sequence of code that, when executed, translates source code of a program written in a high-level language into executable machine code. In one embodiment, the compiler code 104 further includes hints to form code with hints added 106. Compiler code may further predict a target instruction for branch instructions (for example, branch instructions that are likely to be taken (e.g., pre-selected branch instructions)). The branch predictor 120 (e.g., BTB 124 thereof) is thereafter updated with target instruction for a branch instruction. In one embodiment, software manages a hardware BTB, e.g., with the software specifying the prediction mode or with the prediction mode defined implicitly by the mode of the instruction that writes the BTB also setting a mode bit in the entry.

As discussed below, depicted core (e.g., branch predictor 120 thereof) includes access to one or more registers. In certain embodiments, core include one or more general purpose register(s) 108.

In certain embodiments, each entry for the branch predictor 120 (e.g., in BTB 124 thereof) includes a tag field and a target field. In one embodiment, the tag field of each entry in the BTB stores at least a portion of an instruction pointer (e.g., memory address) identifying a branch instruction. In one embodiment, the tag field of each entry in the BTB stores an instruction pointer (e.g., memory address) identifying a branch instruction in code. In one embodiment, the target field stores at least a portion of the instruction pointer for the target of the branch instruction identified in the tag field of the same entry. Moreover, in other embodiment, the entries for the branch predictor 120 (e.g., in BTB 124 thereof) includes one or more other fields. In certain embodiments, an entry does not include a separate field to assist in the prediction of whether the branch instruction is taken, e.g., if a branch instruction is present (e.g., in the BTB), it is considered to be taken.

As shown in Figure 1, the IP Gen mux 113 of IP generation stage 111 receives an instruction pointer from line 114A. The instruction pointer provided via line 115A is generated by the incrementer circuit 115, which receives a copy of the most recent instruction pointer from the path 113A. The incrementer circuit 115 may increment the present instruction pointer by a predetermined amount, to obtain the next sequential instruction from a program sequence presently being executed by the core.

In one embodiment, upon receipt of the IP from IP Gen mux 113, the branch predictor 120 compares a portion of the IP with the tag field of each entry in the branch predictor 120 (e.g., BTB 124). If no match is found between the IP and the tag fields of the branch predictor 120, the IP Gen mux will proceed to select the next sequential IP as the next instruction to be fetched in this embodiment. Conversely, if a match is detected, the branch predictor 120 reads the valid field of the branch predictor entry which matches with the IP. If the valid field is not set (e.g., has logical value of 0) the branch predictor 120 considers the respective entry to be "invalid" and will disregard the match between the IP and the tag of the respective entry in this embodiment, e.g., and the branch target of the respective entry will not be forwarded to the IP Gen Mux. On the other hand, if the valid field of the matching entry is set (e.g., has a logical value of 1), the branch predictor 120 proceeds to perform a logical comparison between a predetermined portion of the instruction pointer (IP) and the branch address (BA) field of the matching branch predictor entry in this embodiment. If an "allowable condition" is present, the branch target of the matching entry will be forwarded to the IP Gen mux, and otherwise, the branch predictor 120 disregards the match between the IP and the tag of the branch predictor entry. In some embodiment, the entry indicator is formed from not only the current branch IP, but also at least a portion of the global history.

More specifically, in one embodiment, the BA field indicates where the respective branch instruction is stored within a line of cache memory 132. In certain embodiments, a processor is able to initiate the execution of multiple instructions per clock cycle, wherein the instructions are not interdependent and do not use the same execution resources.

For example, each line of the instruction cache 132 shown in Figure 1 includes multiple instructions (e.g., six instructions). Moreover, in response to a fetch operation by the fetch unit 134, the instruction cache 132 responds (e.g., in the case of a "hit") by providing a full line of cache to the fetch unit 134 in this embodiment. The instructions within a line of cache may be grouped as separate "bundles." For example, as shown in Figure 1, the first three instructions in a cache line 133 may be addressed as bundle 0, and the second three instructions may be address as bundle 1. Each of the instructions within a bundle are independent of each other (e.g., can be simultaneously issued for execution). The BA field provided in the branch predictor 120 entries is used to identify the bundle address of the branch instruction which corresponds to the respective entry in certain embodiments. For example, in one embodiment, the BA identifies whether the branch instruction is stored in the first or second bundle of a particular cache line.

In one embodiment, the branch predictor 120 performs a logical comparison between the BA field of a matching entry and a predetermined portion of the IP to determine if an "allowable condition" is present. For example, in one embodiment, the fifth bit position of the IP (e.g., IP[4]) is compared with the BA field of a matching (e.g., BTB) entry. In one embodiment, an allowable condition is present when IP [4] is not greater than the BA. Such an allowable condition helps prevent the apparent unnecessary prediction of a branch instruction, which may not be executed. That is, when less than

all of the IP is considered when doing a comparison against the tags of the branch predictor 120, it is possible to have a match with a tag, which may not be a true match. Nevertheless, a match between the IP and a tag of the branch predictor indicates a particular line of cache, which includes a branch instruction corresponding to the respective branch predictor entry, may about to be executed. Specifically, if the bundle address of the IP is not greater than the BA field of the matching branch predictor entry, then the branch instruction in the respective cache line is soon to be executed. Hence, a performance benefit can be achieved by proceeding to fetch the target of the branch instruction in certain embodiments.

As discussed above, if an "allowable condition" is present, the branch target of the matching entry will be forwarded to the IP Gen mux in this example. Otherwise, the branch predictor will disregard the match between the IP and the tag. In one embodiment, the branch target forwarded from the branch predictor is initially sent to a Branch Prediction (BP) resteer mux 128, before it is sent to the IP Gen mux. The BP resteer mux 128, as shown in Figure 1, may also receive instruction pointers from other branch prediction devices. In one embodiment, the input lines received by the BP resteer mux will be prioritized to determine which input line will be allowed to pass through the BP resteer mux onto the IP Gen mux.

In addition to forwarding a branch target to the BP resteer mux, upon detecting a match between the IP and a tag of the branch predictor, the BA of the matching branch predictor entry is forwarded to the Branch Address Calculator (BAC) 142. The BAC 142 is shown in Figure 1 to be located in the decode stage 140, but may be located in other stage(s). The BAC may also receive a cache line from the fetch unit 134 via line 137.

The IP selected by the IP Gen mux is also forwarded to the fetch unit 134, via data line 135 in this example. Once the IP is received by the fetch unit 134, the cache line corresponding to the IP is fetched from the instruction cache 132. The cache line received from the instruction cache is forwarded to the BAC, via data line 137.

Upon receipt of the BA in this example, the BAC will read the BA to determine where the pre-selected branch instruction (e.g., identified in the matching branch predictor entry) is located in the next cache line to be received by the BAC (e.g., the first or second bundle of the cache line). In one embodiment, it is predetermined where the branch instruction is located within a bundle of a cache line (e.g., in a bundle of three instructions, the branch instruction will be stored as the second instruction).

In alternative embodiments, the BA includes additional bits to more specifically identify the address of the branch instruction within a cache line. Therefore, the branch instruction would not be limited to a specific instruction position within a bundle.

After the BAC determines the address of the pre-selected branch instruction within the cache line, and has received the respective cache line from the fetch unit 134, the BAC will decode the respective instruction to verify the IP truly corresponds to a branch instruction. If the instruction addressed by BA in the received cache line is a branch instruction, no correction for the branch prediction is necessary. Conversely, if the respective instruction in the cache line is not a branch instruction (i.e., the IP does not correspond to a branch instruction), the BAC will send a message to the branch predictor to invalidate the respective branch predictor entry, to prevent similar mispredictions on the same branch predictor entry. Thereafter, the invalidated branch predictor entry will be overwritten by a new branch predictor entry.

In addition, in one embodiment, the BAC will increment the IP by a predetermined amount and forward the incremented IP to the BP resteer mux 128, via data line 145, e.g., the data line 145 coming from the BAC will take priority over the data line from the branch predictor. As a result, the incremented IP will be forwarded to the IP Gen mux and passed to the fetch unit in order to correct the branch misprediction by fetching the instructions that sequentially follow the IP.

The embodiments herein for security check elision in speculative execution can be instantiated with a variety of architectures for enforcing a particular security policy (e.g., a memory safety policy and/or a type safety policy). One illustration of this is with Intel® Memory Protection Extensions (MPX), which defines instructions (e.g., BNDCL/N/U) that check a pointer against a memory range indicated by a pair of (e.g., 64-bit) registers. Thus, these instructions can be used to enforce memory safety. The embodiments herein for security check elision in speculative execution can redefine an instruction prefix that is otherwise meaningless in the context of an instruction (e.g., MPX instructions) (e.g., a segment override prefix) to hint to the processor that the check is only needed when checking a pointer for accesses that have not yet been deemed safe. The processor can identify the relevant accesses by enumerating what instructions use the register containing the pointer. However, it is also possible to consider the instruction itself as though it is the accessing instruction and to determine safety on that basis, e.g., since the actual accesses would follow the associated MPX instruction.

The following pseudocode sequence illustrates how an MPX instruction could be modified with a hint to indicate that its security checks are needed only when it may be mis-speculated.

```
int foo(int *x) {
return *x; // this example is constructed to simplify an illustration of security check elision hints
}
Assembly code that unconditionally performs security checks:
foo:
```

(continued)

```
// assume that the parameter x is passed in through the register RDI and the bounds for the object that x points to are passed in through the register BNDO:
BNDCL BNDO, RDI // This bounds checking instruction generates an exception if RDI is below the lower bound in the BNDO register.
BNDCU BNDO, [RDI+3] // This bounds checking instruction generates an exception if RDI+3 (the address of the highest byte accessed by the subsequent move (MOV) instruction) is above the upper bound in the BNDO register.
MOV EAX, [RDI]
Assembly code that conditionally performs security checks for accesses that may be mis-speculated:
foo:
// assume that the parameter x is passed in through the register RDI and the bounds for the object that x points to are passed in through the register BNDO:
ES BNDCL BNDO, RDI // This bounds checking instruction generates an exception if RDI is below the lower bound in the BNDO register. However, if the access is known to be safe, then the bounds check is skipped.
ES BNDCU BNDO, [RDI+3] // This bounds checking instruction generates an exception if RDI+3 (the address of the highest byte accessed by the subsequent MOV instruction) is above the upper bound in the BNDO register. However, if the access is known to be safe, then the bounds check is skipped.
MOV EAX, [RDI]
```

This pseudocode example uses the ES segment override prefix to indicate that memory safety checks are unneeded (e.g., can be elided) if the associated access is known to not be mis-speculated, e.g., and presumes the original purpose for the ES prefix is unimportant in this context and is thus an instruction prefix available for hint usage here.

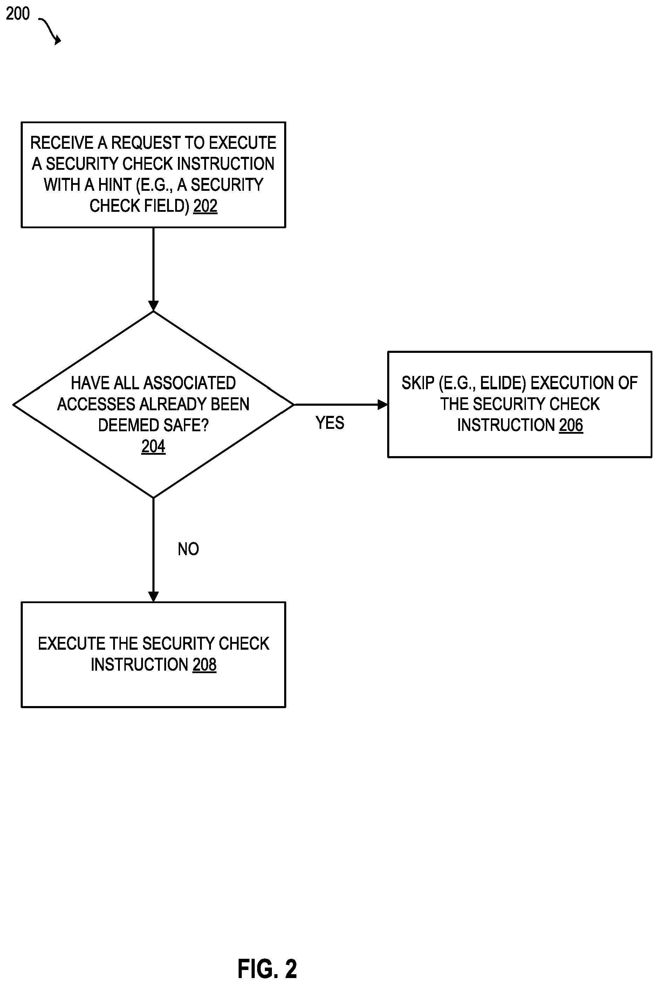

In certain embodiments, an instruction with the hint is treated as a no-operation (nop) if it is already deemed to be safe. An embodiment of this is illustrated in Figure 2.

**Figure 2** illustrates a flow diagram 200 for eliding a security check instruction according to embodiments of the disclosure. Depicted flow diagram 200 includes receiving a request to execute a security check instruction with a hint (e.g., a security check field) 202, determining if all associated accesses for the security check instruction have already been deemed safe 204, and, if yes, skip (e.g., elide) execution of the security check instruction 206 and, if no, execute the security check instruction 208.

In certain embodiments, the eliding removes a proper subset of functionality (e.g., security checks) of an instruction, but does not remove all of the functionality (e.g., does not remove the non-security check functions of the instruction to be partially elided). An example of this is discussed for the pseudocode below.

A processor may have encoded inline capabilities (EIC) as another security architecture that makes use of distinct security check instructions, and those can be treated somewhat similarly to MPX instructions in the context of the embodiments herein for security check elision. In certain embodiments, a difference between MPX and EIC is that the EIC bounds checking instructions not only perform bounds checking like the MPX instructions, but they also decode the input pointer value so that it can be used by the subsequent memory access. Whereas an embodiment of MPX stores bounds separately from pointers, an embodiment of EIC embeds bounds information directly into an encoded (e.g., 64-bit) pointer. This means that in certain embodiments, the pointer is to be decoded to remove that additional information prior to attempting to access memory through the pointer. Thus, even if an access is known to be safe and it is marked as only needing security checks if it may potentially be mis-speculated, certain embodiments of EIC security check instructions are still to decode the pointer so that the subsequent memory access can proceed.

One example of an EIC security check instruction (e.g., named check capability (CheckCap)) takes input operands specifying the encoded pointer as well as the size of the access to be performed, e.g., such that decoding and executing the instruction performs the bounds checks and then overwrites the encoded pointer with the decoded pointer if the bounds checks succeed.

This is illustrated by the following code sequence based on the above pseudocode used for the MPX-based illustration:

```
int foo(int *x) {
return *x;
}
Assembly code that unconditionally performs security checks:
foo:
```

(continued)

```
// assume that the parameter x is passed in through the register RDI:
CheckCap RDI, 4
// This instruction generates an exception if RDI is below the lower bound encoded into RDI or if RDI+3 is past the upper bound encoded into RDI. Otherwise, it decodes the pointer in RDI and overwrites the original value of RDI with the decoded pointer.
MOV RAX, [RDI]
Assembly code that conditionally performs security checks for accesses that may be mis-speculated:
foo:
// assume that the parameter x is passed in through the register RDI:
ES CheckCap RDI, 4
// This instruction generates an exception if RDI is below the lower bound encoded into RDI or if RDI+3 is past the upper bound encoded into RDI. If the instruction is known to be safe, then the bounds checks are skipped. In either case, this instruction decodes the pointer in RDI and overwrites the original value of RDI with the decoded pointer if this instruction does not generate an exception.
MOV RAX, [RDI]
```

As in the MPX-based example, the EIC example redefines the segment override prefix ES to indicate to the processor that the bounds check only needs to be performed if the instruction is potentially mis-speculated in certain embodiments.

Other instructions could also be defined that use applications or language runtimes to manage storage for bounds and type information and perform the actual security checks when necessary. For example, RBNDCL/N/U instructions could operate upon bounds stored in general purpose registers (GPRs) rather than MPX bounds registers, and they may be modified similarly in the context of this disclosure. Furthermore, a type check (TYPECHK) instruction can be defined to compare two type identification values (IDs) for equality and generate an exception if they do not match. These instructions can also be modified with a hint such as an ES prefix to skip the security checks if the instruction is safe.

Some architectures may not depend on distinct instructions to perform security checks, but rather automatically perform security checks prior to accessing memory. For example, memory tags can be checked automatically when a pointer containing a tag value is used in a memory access. The tag values for all accessed memory locations can be loaded from tag storage and compared to the tag in the pointer. If any of those comparisons reveal a mismatch, then an exception can be generated. Just as a hint can be supplied for security check instructions, a hint can be supplied for memory accesses to indicate that automatic security checks should be skipped. Following is an example pseudocode, based on the above examples:

```
int foo(int *x) {
return *x;
}
Assembly code that unconditionally performs security checks:
foo:
// assume that the parameter x is passed in through the register RDI:
MOV RAX, [RDI]
// This instruction generates an exception if the tag checks for RDI reveal a mismatch.
Assembly code that conditionally performs security checks:
foo:
// assume that the parameter x is passed in through the register RDI:
ES MOV RAX, [RDI]
// This instruction generates an exception if the tag checks for RDI reveal a mismatch.
However, if the processor knows that this instruction is safe, then it can elide the tag checks. This may substantially reduce overhead by even avoiding the need to load tag values.
```

However, using certain segment override prefixes as hints may affect memory accesses in undesired ways. For example, using the FS and GS prefixes to provide hints according to this disclosure may cause a segment base address to be added to the address specified in the memory access, which may cause the wrong memory location to be accessed. For example, when those prefixes are already defined in the processor architecture to cause this sort of address computation.

In other modes (e.g., with 32-bit linear addresses), even more segment override prefixes may cause addresses to be added to unintended segment bases. Thus, it may be necessary to select other prefixes that do not cause any unintended effects, or to define new prefixes or other encodings for hints, in certain embodiments.

Some instructions combine multiple types of checks in the same instruction. In one embodiment, an instruction checks both bounds and type information. To illustrate this, consider that the MPX bounds registers and corresponding bounds table entries could be extended to include type information, and that a MPX instruction may be enhanced to check that type information. For example, one variant of a bounds check (e.g., lower bounds check) instruction accepts the address to be checked in a single register operand and thus can be extended to accept an immediate operand specifying a type ID. This enhanced (e.g., BNDCL) instruction, called TYPEBNDCL as an example, can compare the type ID in its immediate operand to the type ID in the bounds register and generate an exception if they do not match. The compiler could then supply hints to selectively cancel either or both of the bound and type checks if the instruction is known to be safe. For example, the ES prefix could cancel the bound check in such cases and the FS segment override prefix could cancel the type check in such cases. Both prefixes could be supplied to cancel both checks, or a third hint, e.g., the GS prefix, could be defined for that purpose.

Not all architectures for enforcing security policies define distinct security check instructions, but the approach of modifying the instructions generating the accesses with instruction prefixes can still apply. For example, memory tagging implicitly checks accesses against bounds metadata that is indexed by the addresses of the storage locations being accessed. Since certain architectures are complex instruction set computing (CISC), a large number of instructions can generate memory accesses, e.g., all instructions with a memory operand. Other security architectures may also perform implicit checks, such as a capability mechanism that enforces memory- and type-safety using fat pointers. As illustrated in the sample code above, it is sometimes only necessary to perform one or the other of bounds and type checking on safe accesses, so separate modifiers for each of those types of checks can be defined for architectures that support both in a single instruction.

The following discuss an example of inserting a hint (e.g., a security check field). In certain embodiments, at each point where the compiler emits a memory access and any associated security checking instruction or instructions if applicable, the compiler is to decide whether to also emit one or more hints as discussed herein. In certain of these embodiments, to do so, the compiler is to consider whether security checks may be elided if the access is deemed safe. Some example scenarios have been provided above, but those are not exhaustive.

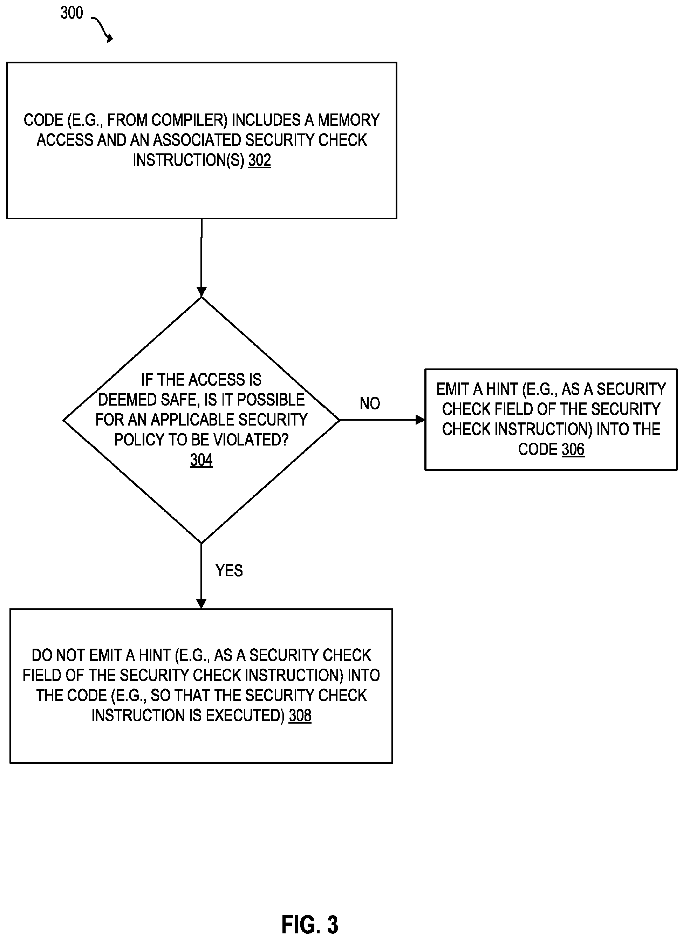

An example flow for making these determinations is illustrated below in reference to Figure 3. This flow may be performed multiple times for each access to make a different determination for different types of policies, e.g., once for memory safety check policy and another for a type safety check policy. In certain embodiments, those decisions ultimately result in merged hints as described above, e.g., to indicate that both memory safety and type safety checks are elided if the access is deemed safe.

**Figure 3** illustrates a flow diagram 300 for emitting a hint into code according to embodiments of the disclosure. Depicted flow 300 includes receiving code (e.g., by or from a compiler) that includes a memory access and an associated security check instruction(s) 302, and, if the access is deemed safe, determining if is it possible for an applicable security policy to be violated 304, and, if no, emitting a hint (e.g., as a security check field of the security check instruction) into the code 306, and, if yes, not emitting a hint (e.g., as a security check field of the security check instruction) into the code (e.g., so that the security check instruction is executed) 308.

The following includes examples of potential types of speculation and associated checks.

In one embodiment, hints to the processor regarding security checks that are (e.g., only) executed if the instruction may potentially be mis-speculated are to specify the type of policy to be enforced for potentially mis-speculated execution, e.g., and then the processor checks conditions that depend on the types of speculation it supports to determine whether the instruction is potentially mis-speculated.

The below describes a non-exhaustive list of examples of potential types of speculation that may be supported by a processor and associated checks that a processor may perform to determine whether an instruction is potentially mis-speculated for that particular type of speculation. If a processor supports multiple types of speculation, then it may perform checks for all supported types of speculation to determine that an instruction is not mis-speculated in a way that may violate certain security policies (e.g.., memory safety or type safety).

Note that there may be other types of speculation supported that do not violate the applicable security policies, and thus security checks may still be skipped even if the processor has not determined that the aspects of an instruction relevant to those other types of speculation have been correctly speculated. For example, it is conceivable that data values could be speculated. Even if a data value for a store is mis-speculated, that does not violate certain embodiments of memory-safety or type-safety policies, e.g., since the data value to be stored has no effect on what address is used for the store.

Thus, certain embodiments make a distinction for an instruction (e.g., the associated memory accesses for a security check instruction) being "safe" rather than "correctly speculated" to refer to instructions for which the processor has determined that mis-speculation of some aspect of the instruction's execution would not undermine the applicable

security policies.

Branch prediction

A processor may attempt to predict which direction a branch will take based on history from previous branches and other factors. In certain embodiments, this is used to speculatively execute the predicted branch target before the branch has resolved (e.g., the correct direction has been definitely determined). To determine that an instruction is on a correctly speculated path, the processor needs to first resolve preceding branches in the program in certain embodiments.

Store buffer bypass speculation

A processor may reorder loads and stores, and sometimes a load may occur that retrieves data from a location that will be overwritten by a store that is older than the load (e.g., that precedes the load in the program). That data may be used speculatively by operations that depend on the load. For example, that data may be interpreted as a pointer address or an integer or floating-point value, etc. For the processor to determine that the correct value has been loaded, it may use memory disambiguation circuitry to verify that the load refers to a location that is not also referenced by any older (e.g., in program order) store operations that are still buffered.

Other possible types of security hardening

There are other possible approaches for security hardening such as waiting until all preceding branches have resolved prior to permitting a memory access to make changes to cache state that may be visible to an adversary. Those can enforce stricter policies than the examples that are listed above, which may otherwise permit changes to cache state that may be visible to an adversary after memory-safety or type-safety checks complete but while forms of mis-speculation not checked as part of enforcing those policies may still be possible. For example, consider the following example pseudocode:

```
int foo(bool *priv) {
int priv_array[] = { ... /* 5 elements */ };
int unpriv_array[] = { ... /* 10 elements */ };
int *arr = NULL;
int idx = 9;
if (*priv) { // The value *priv being true indicates that a privileged entity is invoking the function and is authorized
to access data within priv_array. Otherwise, if *priv is false, the caller is only authorized to receive data from
unpriv_array.
arr = priv_array;
idx = 4;
} else {
arr = unpriv_array;
}
// If we assume that the processor may use a mis-speculated value of idx to index into arr, e.g., due to the store
generated by the update to idx within the if block being bypassed by the load of idx generated from the return
statement below, then this is an instance in which the compiler would choose to insert a memory safety check
with a hint that it is unneeded if the access is deemed safe. A type-safety check could also be performed if
there is some possibility of the processor mis-speculating that arr points to memory of the wrong type.
return arr[idx];
}
```

Consider that the read from the memory pointed to by priv may be delayed, so the processor may mis-speculate whether to execute the code in the if or the else block. Memory- and/or type-safety checks could still be applied to the access to the array referenced through the arr variable. However, those checks would not necessarily prevent access to priv_array when foo is invoked from an unprivileged caller, regardless of whether certain hints described in this disclosure are applied to those checks or not. Consider that a malicious caller could then potentially use the return value from the function to affect cache state in a way that may be visible to an adversary.

For situations such as this, another type of hint is defined herein that selectively enforces stricter policies, such as the one described in the pseudocode above. For example, the memory access generated by the return statement in the

sample code can be modified with another segment override prefix, e.g., GS, to indicate that it should be regulated according to the stricter policy. However, memory- and type-safety may be sufficient for some applications or portions of applications, and users of that code may benefit from the additional optimizations that are possible if just those looser policies are enforced. Enabling selective enforcement of stricter policies as described above may be useful in that it enforces a looser policy by default to provide additional opportunities for optimizations while still enforcing the stricter policy at critical points in the program.

The strategy of making speculation invisible in the data cache hierarchy is an example of a mechanism for enforcing a stricter type of policy that could be selected by this hint as described above.

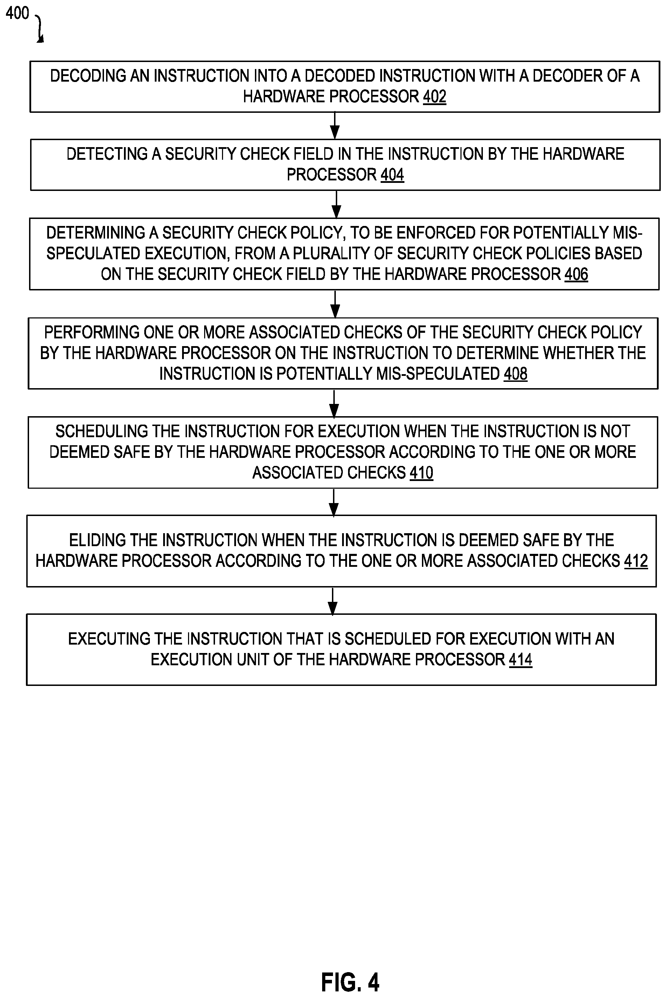

**Figure 4** illustrates a flow diagram 400 according to embodiments of the disclosure. Depicted flow 400 includes decoding an instruction into a decoded instruction with a decoder of a hardware processor 402, detecting a security check field in the instruction by the hardware processor 404, determining a security check policy, to be enforced for potentially mis-speculated execution, from a plurality of security check policies based on the security check field by the hardware processor 406, performing one or more associated checks of the security check policy by the hardware processor on the instruction to determine whether the instruction is potentially mis-speculated 408, scheduling the instruction for execution when the instruction is not deemed safe by the hardware processor according to the one or more associated checks 410, eliding the instruction when the instruction is deemed safe by the hardware processor according to the one or more associated checks 412, and executing the instruction that is scheduled for execution with an execution unit of the hardware processor 414.

Exemplary architectures, systems, etc. that the above may be used in are detailed below.

At least some embodiments of the disclosed technologies can be described in view of the following examples:

Example 1. An apparatus comprising:

a decoder to decode an instruction into a decoded instruction;
a speculation manager circuit to:

detect a hint (e.g., a security check field) in the instruction,
determine a security check policy, to be enforced for potentially mis-speculated execution, from a plurality of security check policies based on the hint (e.g., the security check field),
perform one or more associated checks of the security check policy on the instruction to determine whether the instruction is potentially mis-speculated,
schedule the instruction for execution when the instruction is not deemed safe according to the one or more associated checks, and
elide the instruction when the instruction is deemed safe according to the one or more associated checks; and

an execution unit to execute the instruction that is scheduled for execution.

2. The apparatus of example 1, wherein the hint (e.g., the security check field) is a compiler provided hint.

3. The apparatus of example 1, wherein the speculation manager circuit is to perform the one or more associated checks of the security check policy on a set of associated memory accesses of the instruction.

4. The apparatus of example 1, wherein the security check policy is a memory safety check policy.

5. The apparatus of example 1, wherein the security check policy is a type safety check policy.

6. The apparatus of example 1, wherein the one or more associated checks of the security check policy comprise a memory safety check and a type safety check.

7. The apparatus of example 1, wherein the one or more associated checks are less than a full conformance check for an architectural specification of the apparatus.

8. The apparatus of example 1, wherein the instruction is a security checking instruction associated with a succeeding memory access instruction in program order.

Example 9. A method comprising:

decoding an instruction into a decoded instruction with a decoder of a hardware processor;

detecting a security check field in the instruction by the hardware processor;
determining a security check policy, to be enforced for potentially mis-speculated execution, from a plurality of security check policies based on the security check field by the hardware processor;
performing one or more associated checks of the security check policy by the hardware processor on the instruction to determine whether the instruction is potentially mis-speculated;
scheduling the instruction for execution when the instruction is not deemed safe by the hardware processor according to the one or more associated checks;
eliding the instruction when the instruction is deemed safe by the hardware processor according to the one or more associated checks; and
executing the instruction that is scheduled for execution with an execution unit of the hardware processor.

10. The method of example 9, wherein the security check field is a compiler provided hint.

11. The method of example 9, wherein the performing comprises performing the one or more associated checks of the security check policy on a set of associated memory accesses of the instruction.

12. The method of example 9, wherein the security check policy is a memory safety check policy.

13. The method of example 9, wherein the security check policy is a type safety check policy.

14. The method of example 9, wherein the one or more associated checks of the security check policy comprise a memory safety check and a type safety check.

15. The method of example 9, wherein the one or more associated checks are less than a full conformance check for an architectural specification of the hardware processor.

16. The method of example 9, wherein the instruction is a security checking instruction associated with a succeeding memory access instruction in program order.

Example 17. A non-transitory machine readable medium that stores code that when executed by a machine causes the machine to perform a method comprising:

decoding an instruction into a decoded instruction with a decoder of a hardware processor;
detecting a security check field in the instruction by the hardware processor;
determining a security check policy, to be enforced for potentially mis-speculated execution, from a plurality of security check policies based on the security check field by the hardware processor;
performing one or more associated checks of the security check policy by the hardware processor on the instruction to determine whether the instruction is potentially mis-speculated;
scheduling the instruction for execution when the instruction is not deemed safe by the hardware processor according to the one or more associated checks;
eliding the instruction when the instruction is deemed safe by the hardware processor according to the one or more associated checks; and
executing the instruction that is scheduled for execution with an execution unit of the hardware processor.

18. The non-transitory machine readable medium of example 17, wherein the security check field is a compiler provided hint.

19. The non-transitory machine readable medium of example 17, wherein the performing comprises performing the one or more associated checks of the security check policy on a set of associated memory accesses of the instruction.

20. The non-transitory machine readable medium of example 17, wherein the security check policy is a memory safety check policy.

21. The non-transitory machine readable medium of example 17, wherein the security check policy is a type safety check policy.

22. The non-transitory machine readable medium of example 17, wherein the one or more associated checks of the security check policy comprise a memory safety check and a type safety check.

23. The non-transitory machine readable medium of example 17, wherein the one or more associated checks are less than a full conformance check for an architectural specification of the hardware processor.

24. The non-transitory machine readable medium of example 17, wherein the instruction is a security checking instruction associated with a succeeding memory access instruction in program order.

In yet another embodiment, an apparatus comprises a data storage device that stores code that when executed by a hardware processor causes the hardware processor to perform any method disclosed herein. An apparatus may be as described in the detailed description. A method may be as described in the detailed description.

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, November 2018; and see Intel® Architecture Instruction Set Extensions Programming Reference, October 2018).

**Exemplary Instruction Formats**

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

**Generic Vector Friendly Instruction Format**

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

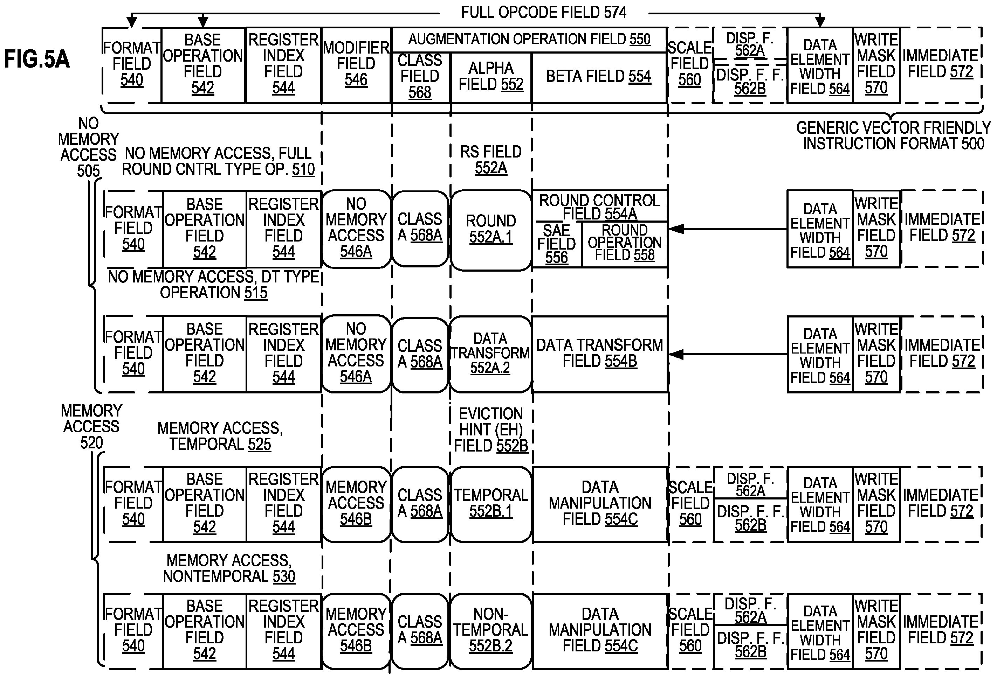

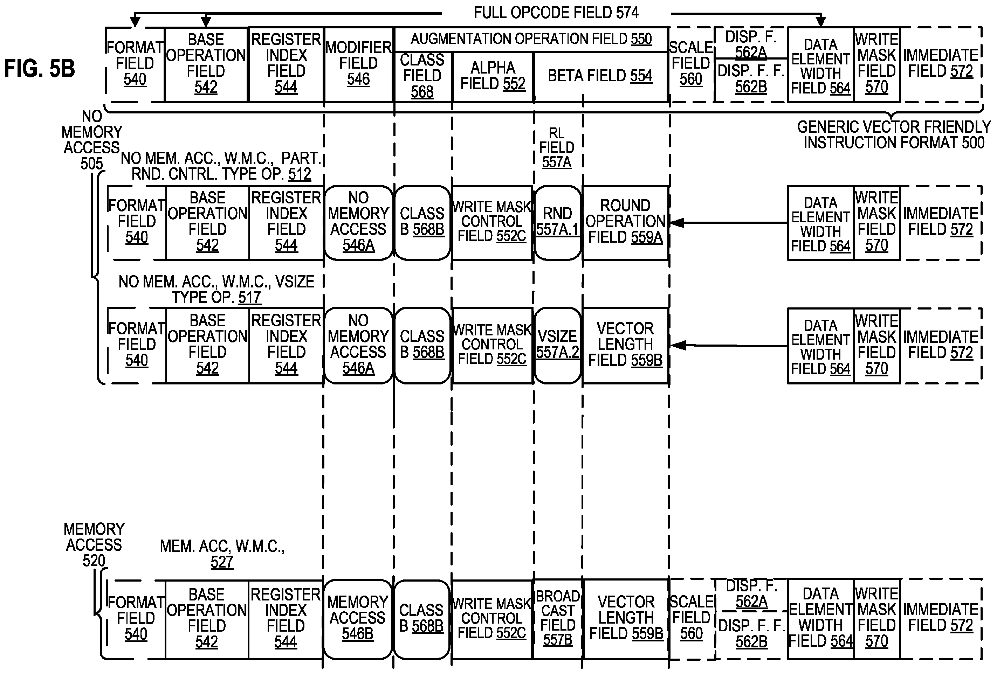

**Figures 5A-5B** are block diagrams illustrating a generic vector friendly instruction format and instruction templates thereof according to embodiments of the disclosure. **Figure 5A** is a block diagram illustrating a generic vector friendly instruction format and class A instruction templates thereof according to embodiments of the disclosure; while **Figure 5B** is a block diagram illustrating the generic vector friendly instruction format and class B instruction templates thereof according to embodiments of the disclosure. Specifically, a generic vector friendly instruction format 500 for which are defined class A and class B instruction templates, both of which include no memory access 505 instruction templates and memory access 520 instruction templates. The term generic in the context of the vector friendly instruction format refers to the instruction format not being tied to any specific instruction set.

While embodiments of the disclosure will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in **Figure 5A** include: 1) within the no memory access 505 instruction templates there is shown a no memory access, full round control type operation 510 instruction template and a no memory access, data transform type operation 515 instruction template; and 2) within the memory access 520 instruction templates there is shown a memory access, temporal 525 instruction template and a memory access, non-temporal 530 instruction template. The class B instruction templates in **Figure 5B** include: 1) within the no memory access 505 instruction templates there is

shown a no memory access, write mask control, partial round control type operation 512 instruction template and a no memory access, write mask control, vsize type operation 517 instruction template; and 2) within the memory access 520 instruction templates there is shown a memory access, write mask control 527 instruction template.

The generic vector friendly instruction format 500 includes the following fields listed below in the order illustrated in **Figures 5A-5B.**

Format field 540 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 542 - its content distinguishes different base operations.

Register index field 544 - its content, directly or through address generation, specifies the locations of the source and destination operands, be they in registers or in memory. These include a sufficient number of bits to select N registers from a PxQ (e.g., 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 546 - its content distinguishes occurrences of instructions in the generic vector instruction format that specify memory access from those that do not; that is, between no memory access 505 instruction templates and memory access 520 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 550 - its content distinguishes which one of a variety of different operations to be performed in addition to the base operation. This field is context specific. In one embodiment of the disclosure, this field is divided into a class field 568, an alpha field 552, and a beta field 554. The augmentation operation field 550 allows common groups of operations to be performed in a single instruction rather than 2, 3, or 4 instructions.

Scale field 560 - its content allows for the scaling of the index field's content for memory address generation (e.g., for address generation that uses $2^{scale}$ * index + base).

Displacement Field 562A- its content is used as part of memory address generation (e.g., for address generation that uses $2^{scale}$ * index + base + displacement).

Displacement Factor Field 562B (note that the juxtaposition of displacement field 562A directly over displacement factor field 562B indicates one or the other is used) - its content is used as part of address generation; it specifies a displacement factor that is to be scaled by the size of a memory access (N) - where N is the number of bytes in the memory access (e.g., for address generation that uses $2^{scale}$ * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 574 (described later herein) and the data manipulation field 554C. The displacement field 562A and the displacement factor field 562B are optional in the sense that they are not used for the no memory access 505 instruction templates and/or different embodiments may implement only one or none of the two.

Data element width field 564 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 570 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 570 allows for partial vector operations, including loads, stores, arithmetic, logical, etc. While embodiments of the disclosure are described in which the write mask field's 570 content selects one of a number of write mask registers that contains

the write mask to be used (and thus the write mask field's 570 content indirectly identifies that masking to be performed), alternative embodiments instead or additional allow the mask write field's 570 content to directly specify the masking to be performed.

Immediate field 572 - its content allows for the specification of an immediate. This field is optional in the sense that is it not present in an implementation of the generic vector friendly format that does not support immediate and it is not present in instructions that do not use an immediate.

Class field 568 - its content distinguishes between different classes of instructions. With reference to **Figures 5A-B**, the contents of this field select between class A and class B instructions. In **Figures 5A-B**, rounded corner squares are used to indicate a specific value is present in a field (e.g., class A 568A and class B 568B for the class field 568 respectively in **Figures 5A-B**).

**Instruction Templates of Class A**

In the case of the non-memory access 505 instruction templates of class A, the alpha field 552 is interpreted as an RS field 552A, whose content distinguishes which one of the different augmentation operation types are to be performed (e.g., round 552A.1 and data transform 552A.2 are respectively specified for the no memory access, round type operation 510 and the no memory access, data transform type operation 515 instruction templates), while the beta field 554 distinguishes which of the operations of the specified type is to be performed. In the no memory access 505 instruction templates, the scale field 560, the displacement field 562A, and the displacement scale filed 562B are not present.

No-Memory Access Instruction Templates - Full Round Control Type Operation

In the no memory access full round control type operation 510 instruction template, the beta field 554 is interpreted as a round control field 554A, whose content(s) provide static rounding. While in the described embodiments of the disclosure the round control field 554A includes a suppress all floating point exceptions (SAE) field 556 and a round operation control field 558, alternative embodiments may support may encode both these concepts into the same field or only have one or the other of these concepts/fields (e.g., may have only the round operation control field 558).

SAE field 556 - its content distinguishes whether or not to disable the exception event reporting; when the SAE field's 556 content indicates suppression is enabled, a given instruction does not report any kind of floating-point exception flag and does not raise any floating point exception handler.

Round operation control field 558 - its content distinguishes which one of a group of rounding operations to perform (e.g., Round-up, Round-down, Round-towards-zero and Round-to-nearest). Thus, the round operation control field 558 allows for the changing of the rounding mode on a per instruction basis. In one embodiment of the disclosure where a processor includes a control register for specifying rounding modes, the round operation control field's 550 content overrides that register value.

No Memory Access Instruction Templates - Data Transform Type Operation

In the no memory access data transform type operation 515 instruction template, the beta field 554 is interpreted as a data transform field 554B, whose content distinguishes which one of a number of data transforms is to be performed (e.g., no data transform, swizzle, broadcast).

In the case of a memory access 520 instruction template of class A, the alpha field 552 is interpreted as an eviction hint field 552B, whose content distinguishes which one of the eviction hints is to be used (in **Figure 5A**, temporal 552B.1 and non-temporal 552B.2 are respectively specified for the memory access, temporal 525 instruction template and the memory access, non-temporal 530 instruction template), while the beta field 554 is interpreted as a data manipulation field 554C, whose content distinguishes which one of a number of data manipulation operations (also known as primitives) is to be performed (e.g., no manipulation; broadcast; up conversion of a source; and down conversion of a destination). The memory access 520 instruction templates include the scale field 560, and optionally the displacement field 562A or the displacement scale field 562B.

Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

Memory Access Instruction Templates - Temporal

Temporal data is data likely to be reused soon enough to benefit from caching. This is, however, a hint, and different processors may implement it in different ways, including ignoring the hint entirely.

Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

**Instruction Templates of Class B**

In the case of the instruction templates of class B, the alpha field 552 is interpreted as a write mask control (Z) field 552C, whose content distinguishes whether the write masking controlled by the write mask field 570 should be a merging or a zeroing.

In the case of the non-memory access 505 instruction templates of class B, part of the beta field 554 is interpreted as an RL field 557A, whose content distinguishes which one of the different augmentation operation types are to be performed (e.g., round 557A.1 and vector length (VSIZE) 557A.2 are respectively specified for the no memory access, write mask control, partial round control type operation 512 instruction template and the no memory access, write mask control, VSIZE type operation 517 instruction template), while the rest of the beta field 554 distinguishes which of the operations of the specified type is to be performed. In the no memory access 505 instruction templates, the scale field 560, the displacement field 562A, and the displacement scale filed 562B are not present.

In the no memory access, write mask control, partial round control type operation 510 instruction template, the rest of the beta field 554 is interpreted as a round operation field 559A and exception event reporting is disabled (a given instruction does not report any kind of floating-point exception flag and does not raise any floating point exception handler).

Round operation control field 559A - just as round operation control field 558, its content distinguishes which one of a group of rounding operations to perform (e.g., Round-up, Round-down, Round-towards-zero and Round-to-nearest). Thus, the round operation control field 559A allows for the changing of the rounding mode on a per instruction basis. In one embodiment of the disclosure where a processor includes a control register for specifying rounding modes, the round operation control field's 550 content overrides that register value.

In the no memory access, write mask control, VSIZE type operation 517 instruction template, the rest of the beta field 554 is interpreted as a vector length field 559B, whose content distinguishes which one of a number of data vector lengths is to be performed on (e.g., 128, 256, or 512 byte).

In the case of a memory access 520 instruction template of class B, part of the beta field 554 is interpreted as a broadcast field 557B, whose content distinguishes whether or not the broadcast type data manipulation operation is to be performed, while the rest of the beta field 554 is interpreted the vector length field 559B. The memory access 520 instruction templates include the scale field 560, and optionally the displacement field 562A or the displacement scale field 562B.

With regard to the generic vector friendly instruction format 500, a full opcode field 574 is shown including the format field 540, the base operation field 542, and the data element width field 564. While one embodiment is shown where the full opcode field 574 includes all of these fields, the full opcode field 574 includes less than all of these fields in embodiments that do not support all of them. The full opcode field 574 provides the operation code (opcode).

The augmentation operation field 550, the data element width field 564, and the write mask field 570 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the disclosure, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the disclosure). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the disclosure. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of

all classes and having control flow code that selects the routines to execute based on the instructions supported by the processor which is currently executing the code.

**Exemplary Specific Vector Friendly Instruction Format**

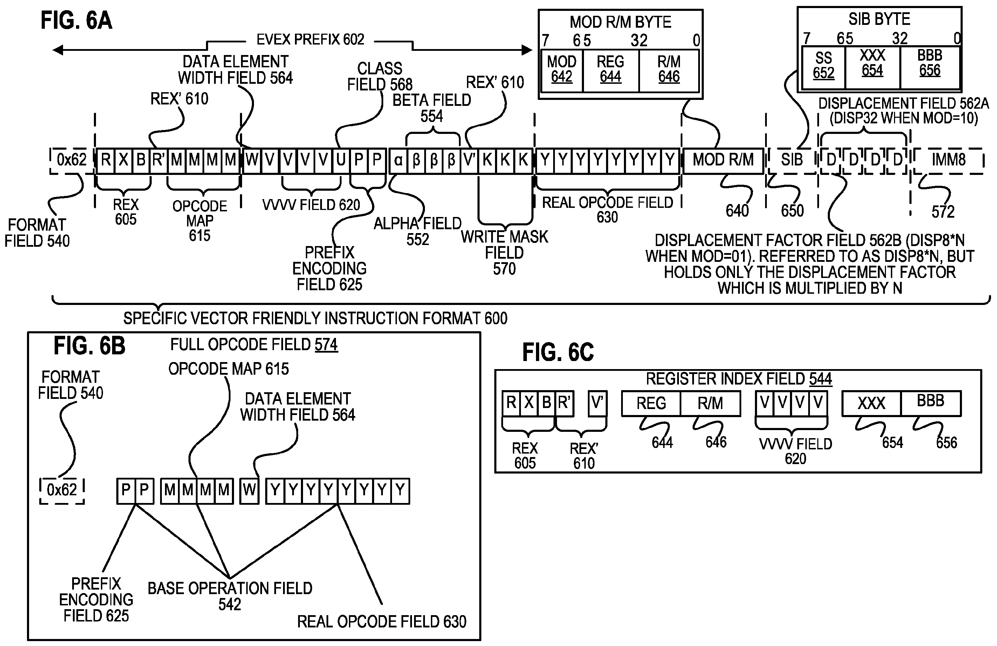

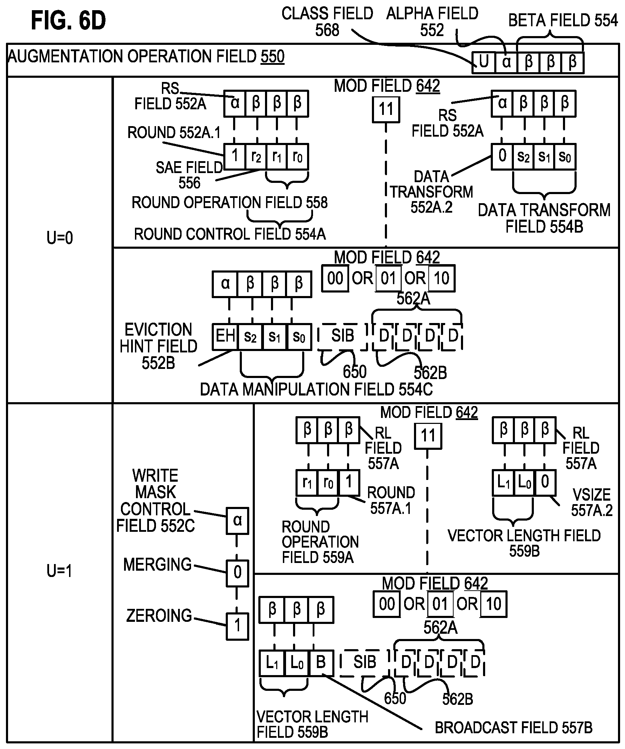

**Figure 6** is a block diagram illustrating an exemplary specific vector friendly instruction format according to embodiments of the disclosure. **Figure 6** shows a specific vector friendly instruction format 600 that is specific in the sense that it specifies the location, size, interpretation, and order of the fields, as well as values for some of those fields. The specific vector friendly instruction format 600 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from **Figure 5** into which the fields from **Figure 6** map are illustrated.

It should be understood that, although embodiments of the disclosure are described with reference to the specific vector friendly instruction format 600 in the context of the generic vector friendly instruction format 500 for illustrative purposes, the disclosure is not limited to the specific vector friendly instruction format 600 except where claimed. For example, the generic vector friendly instruction format 500 contemplates a variety of possible sizes for the various fields, while the specific vector friendly instruction format 600 is shown as having fields of specific sizes. By way of specific example, while the data element width field 564 is illustrated as a one bit field in the specific vector friendly instruction format 600, the disclosure is not so limited (that is, the generic vector friendly instruction format 500 contemplates other sizes of the data element width field 564).

The generic vector friendly instruction format 500 includes the following fields listed below in the order illustrated in **Figure 6A.**

EVEX Prefix (Bytes 0-3) 602 - is encoded in a four-byte form.

Format Field 540 (EVEX Byte 0, bits [7:0]) - the first byte (EVEX Byte 0) is the format field 540 and it contains 0x62 (the unique value used for distinguishing the vector friendly instruction format in one embodiment of the disclosure).

The second-fourth bytes (EVEX Bytes 1-3) include a number of bit fields providing specific capability.

REX field 605 (EVEX Byte 1, bits [7-5]) - consists of a EVEX.R bit field (EVEX Byte 1, bit [7] - R), EVEX.X bit field (EVEX byte 1, bit [6] - X), and 557BEX byte 1, bit[5] - B). The EVEX.R, EVEX.X, and EVEX.B bit fields provide the same functionality as the corresponding VEX bit fields, and are encoded using 1s complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 510 - this is the first part of the REX' field 510 and is the EVEX.R' bit field (EVEX Byte 1, bit [4] - R') that is used to encode either the upper 16 or lower 16 of the extended 32 register set. In one embodiment of the disclosure, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the disclosure do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 615 (EVEX byte 1, bits [3:0] - mmmm) - its content encodes an implied leading opcode byte (0F, 0F 38, or 0F 3).

Data element width field 564 (EVEX byte 2, bit [7] - W) - is represented by the notation EVEX.W. EVEX.W is used to define the granularity (size) of the datatype (either 32-bit data elements or 64-bit data elements).

EVEX.vvvv 620 (EVEX Byte 2, bits [6:3]-vvvv)- the role of EVEX.vvvv may include the following: 1) EVEX.vvvv encodes the first source register operand, specified in inverted (1s complement) form and is valid for instructions with 2 or more source operands; 2) EVEX.vvvv encodes the destination register operand, specified in 1s complement form for certain vector shifts; or 3) EVEX.vvvv does not encode any operand, the field is reserved and should contain 1111b. Thus, EVEX.vvvv field 620 encodes the 4 low-order bits of the first source register specifier stored in inverted (1s complement) form. Depending on the instruction, an extra different EVEX bit field is used to extend the specifier size to 32 registers.

EVEX.U 568 Class field (EVEX byte 2, bit [2]-U) - If EVEX.U = 0, it indicates class A or EVEX.U0; if EVEX.U = 1, it indicates class B or EVEX.U1.

Prefix encoding field 625 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decode circuit's PLA (so the PLA can execute both the legacy and EVEX format of these legacy instructions without modification). Although newer instructions could use the

EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 552 (EVEX byte 3, bit [7] - EH; also known as EVEX.EH, EVEX.rs, EVEX.RL, EVEX.write mask control, and EVEX.N; also illustrated with $\alpha$) - as previously described, this field is context specific.

Beta field 554 (EVEX byte 3, bits [6:4]-SSS, also known as EVEX.$s_{2-0}$, EVEX.$r_{2-0}$, EVEXrr1, EVEX.LL0, EVEX.LLB; also illustrated with $\beta\beta\beta$) - as previously described, this field is context specific.

REX' field 510 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 570 (EVEX byte 3, bits [2:0]-kkk) - its content specifies the index of a register in the write mask registers as previously described. In one embodiment of the disclosure, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 630 (Byte 4) is also known as the opcode byte. Part of the opcode is specified in this field.

MOD R/M Field 640 (Byte 5) includes MOD field 642, Reg field 644, and R/M field 646. As previously described, the MOD field's 642 content distinguishes between memory access and non-memory access operations. The role of Reg field 644 can be summarized to two situations: encoding either the destination register operand or a source register operand, or be treated as an opcode extension and not used to encode any instruction operand. The role of R/M field 646 may include the following: encoding the instruction operand that references a memory address, or encoding either the destination register operand or a source register operand.

Scale, Index, Base (SIB) Byte (Byte 6) - As previously described, the scale field's 550 content is used for memory address generation. SIB.xxx 654 and SIB.bbb 656 - the contents of these fields have been previously referred to with regard to the register indexes Xxxx and Bbbb.

Displacement field 562A (Bytes 7-10) - when MOD field 642 contains 10, bytes 7-10 are the displacement field 562A, and it works the same as the legacy 32-bit displacement (disp32) and works at byte granularity.

Displacement factor field 562B (Byte 7) - when MOD field 642 contains 01, byte 7 is the displacement factor field 562B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 562B is a reinterpretation of disp8; when using displacement factor field 562B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 562B substitutes the legacy x86 instruction set 8-bit displacement. Thus, the displacement factor field 562B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 572 operates as previously described.

### Full Opcode Field

**Figure 6B** is a block diagram illustrating the fields of the specific vector friendly instruction format 600 that make up the full opcode field 574 according to one embodiment of the disclosure. Specifically, the full opcode field 574 includes the format field 540, the base operation field 542, and the data element width (W) field 564. The base operation field 542 includes the prefix encoding field 625, the opcode map field 615, and the real opcode field 630.

### Register Index Field

**Figure 6C** is a block diagram illustrating the fields of the specific vector friendly instruction format 600 that make up the register index field 544 according to one embodiment of the disclosure. Specifically, the register index field 544 includes the REX field 605, the REX' field 610, the MODR/M.reg field 644, the MODR/M.r/m field 646, the VVVV field 620, xxx field 654, and the bbb field 656.

## Augmentation Operation Field

**Figure 6D** is a block diagram illustrating the fields of the specific vector friendly instruction format 600 that make up the augmentation operation field 550 according to one embodiment of the disclosure. When the class (U) field 568 contains 0, it signifies EVEX.U0 (class A 568A); when it contains 1, it signifies EVEX.U1 (class B 568B). When U=0 and the MOD field 642 contains 11 (signifying a no memory access operation), the alpha field 552 (EVEX byte 3, bit [7] - EH) is interpreted as the rs field 552A. When the rs field 552A contains a 1 (round 552A.1), the beta field 554 (EVEX byte 3, bits [6:4]- SSS) is interpreted as the round control field 554A. The round control field 554A includes a one bit SAE field 556 and a two bit round operation field 558. When the rs field 552A contains a 0 (data transform 552A.2), the beta field 554 (EVEX byte 3, bits [6:4]- SSS) is interpreted as a three bit data transform field 554B. When U=0 and the MOD field 642 contains 00, 01, or 10 (signifying a memory access operation), the alpha field 552 (EVEX byte 3, bit [7] - EH) is interpreted as the eviction hint (EH) field 552B and the beta field 554 (EVEX byte 3, bits [6:4]- SSS) is interpreted as a three bit data manipulation field 554C.

When U=1, the alpha field 552 (EVEX byte 3, bit [7] - EH) is interpreted as the write mask control (Z) field 552C. When U=1 and the MOD field 642 contains 11 (signifying a no memory access operation), part of the beta field 554 (EVEX byte 3, bit [4]- $S_0$) is interpreted as the RL field 557A; when it contains a 1 (round 557A.1) the rest of the beta field 554 (EVEX byte 3, bit [6-5]- $S_{2-1}$) is interpreted as the round operation field 559A, while when the RL field 557A contains a 0 (VSIZE 557.A2) the rest of the beta field 554 (EVEX byte 3, bit [6-5]- $S_{2-1}$) is interpreted as the vector length field 559B (EVEX byte 3, bit [6-5]- $L_{1-0}$). When U=1 and the MOD field 642 contains 00, 01, or 10 (signifying a memory access operation), the beta field 554 (EVEX byte 3, bits [6:4]- SSS) is interpreted as the vector length field 559B (EVEX byte 3, bit [6-5]- $L_{1-0}$) and the broadcast field 557B (EVEX byte 3, bit [4]- B).

## Exemplary Register Architecture

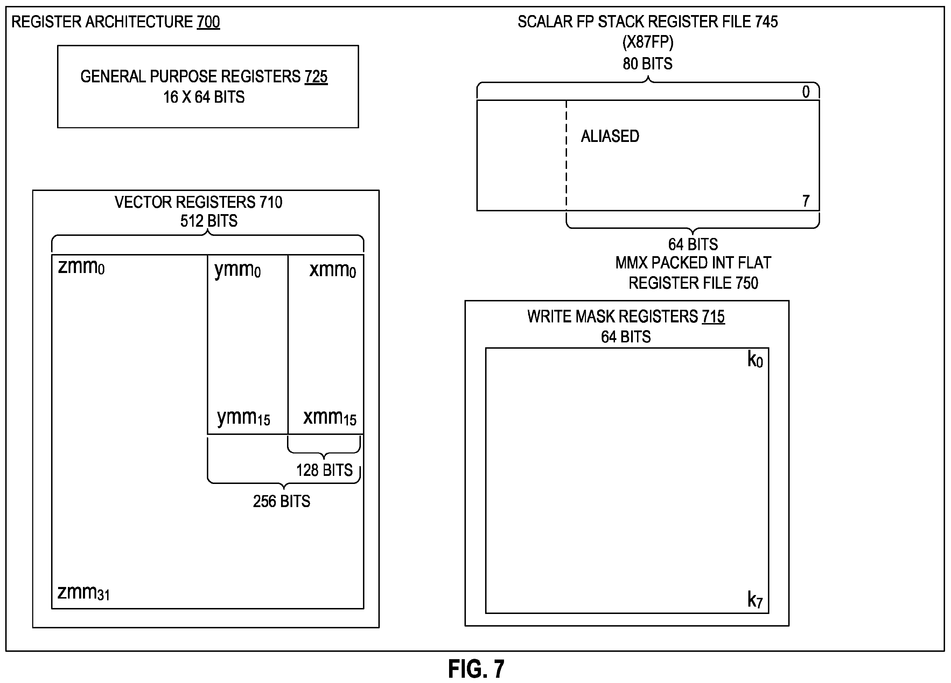

**Figure 7** is a block diagram of a register architecture 700 according to one embodiment of the disclosure. In the embodiment illustrated, there are 32 vector registers 710 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 600 operates on these overlaid register file as illustrated in the below tables.

| Adjustable Vector Length | Class | Operations | Registers |
|---|---|---|---|
| Instruction Templates that do not include the vector length field 559B | A (Figure 5A; U=0) | 510, 515, 525, 530 | zmm registers (the vector length is 64 byte) |
| | B (Figure 5B; U=1) | 512 | zmm registers (the vector length is 64 byte) |
| Instruction templates that do include the vector length field 559B | B (Figure 5B; U=1) | 517, 527 | zmm, ymm, or xmm registers (the vector length is 64 byte, 32 byte, or 16 byte) depending on the vector length field 559B |

In other words, the vector length field 559B selects between a maximum length and one or more other shorter lengths, where each such shorter length is half the length of the preceding length; and instructions templates without the vector length field 559B operate on the maximum vector length. Further, in one embodiment, the class B instruction templates of the specific vector friendly instruction format 600 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 715 - in the embodiment illustrated, there are 8 write mask registers (k0 through k7), each 64 bits in size. In an alternate embodiment, the write mask registers 715 are 16 bits in size. As previously described, in one embodiment of the disclosure, the vector mask register k0 cannot be used as a write mask; when the encoding that would normally indicate k0 is used for a write mask, it selects a hardwired write mask of 0xFFFF, effectively disabling write masking for that instruction.

General-purpose registers 725 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 745, on which is aliased the MMX packed integer flat register file 750 - in the embodiment illustrated, the x87 stack is an eight-element stack used to perform scalar floating-point operations

on 32/64/80-bit floating point data using the x87 instruction set extension; while the MMX registers are used to perform operations on 64-bit packed integer data, as well as to hold operands for some operations performed between the MMX and XMM registers.

Alternative embodiments of the disclosure may use wider or narrower registers. Additionally, alternative embodiments of the disclosure may use more, less, or different register files and registers.

## Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

## Exemplary Core Architectures

### In-order and out-of-order core block diagram

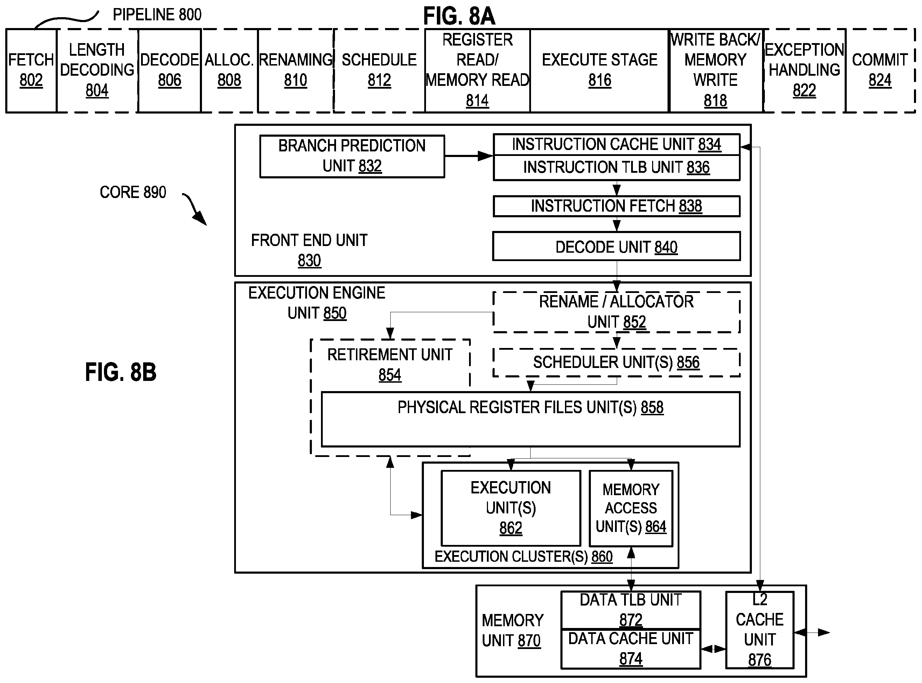

**Figure 8A** is a block diagram illustrating both an exemplary in-order pipeline and an exemplary register renaming, out-of-order issue/execution pipeline according to embodiments of the disclosure. Figure 8B is a block diagram illustrating both an exemplary embodiment of an in-order architecture core and an exemplary register renaming, out-of-order issue/execution architecture core to be included in a processor according to embodiments of the disclosure. The solid lined boxes in **Figures 8A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 8A,** a processor pipeline 800 includes a fetch stage 802, a length decode stage 804, a decode stage 806, an allocation stage 808, a renaming stage 810, a scheduling (also known as a dispatch or issue) stage 812, a register read/memory read stage 814, an execute stage 816, a write back/memory write stage 818, an exception handling stage 822, and a commit stage 824.

**Figure 8B** shows processor core 890 including a front end unit 830 coupled to an execution engine unit 850, and both are coupled to a memory unit 870. The core 890 may be a reduced instruction set computing (RISC) core, a complex instruction set computing (CISC) core, a very long instruction word (VLIW) core, or a hybrid or alternative core type. As yet another option, the core 890 may be a special-purpose core, such as, for example, a network or communication core, compression engine, coprocessor core, general purpose computing graphics processing unit (GPGPU) core, graphics core, or the like.

The front end unit 830 includes a branch prediction unit 832 coupled to an instruction cache unit 834, which is coupled to an instruction translation lookaside buffer (TLB) 836, which is coupled to an instruction fetch unit 838, which is coupled to a decode unit 840. The decode unit 840 (e.g., decode circuit) may decode instructions (e.g., macro-instructions), and generate as an output one or more micro-operations, micro-code entry points, micro-instructions, other instructions, or other control signals, which are decoded from, or which otherwise reflect, or are derived from, the original instructions. The decode unit 840 may be implemented using various different mechanisms. Examples of suitable mechanisms include, but are not limited to, look-up tables, hardware implementations, programmable logic arrays (PLAs), microcode read only memories (ROMs), etc. In one embodiment, the core 890 includes a microcode ROM or other medium that stores microcode for certain macro-instructions (e.g., in decode unit 840 or otherwise within the front end unit 830). The decode unit 840 is coupled to a rename/allocator unit 852 in the execution engine unit 850.

The execution engine unit 850 includes the rename/allocator unit 852 coupled to a retirement unit 854 and a set of one or more scheduler unit(s) 856. The scheduler unit(s) 856 represents any number of different schedulers, including reservations stations, central instruction window, etc. The scheduler unit(s) 856 is coupled to the physical register file(s) unit(s) 858. Each of the physical register file(s) units 858 represents one or more physical register files, different ones of

which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 858 comprises a vector registers unit, a write mask registers unit, and a scalar registers unit. These register units may provide architectural vector registers, vector mask registers, and general purpose registers. The physical register file(s) unit(s) 858 is overlapped by the retirement unit 854 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 854 and the physical register file(s) unit(s) 858 are coupled to the execution cluster(s) 860. The execution cluster(s) 860 includes a set of one or more execution units 862 (e.g., execution circuits) and a set of one or more memory access units 864. The execution units 862 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 856, physical register file(s) unit(s) 858, and execution cluster(s) 860 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 864). It should also be understood that where separate pipelines are used, one or more of these pipelines may be out-of-order issue/execution and the rest in-order.

The set of memory access units 864 is coupled to the memory unit 870, which includes a data TLB unit 872 coupled to a data cache unit 874 coupled to a level 2 (L2) cache unit 876. In one exemplary embodiment, the memory access units 864 may include a load unit, a store address unit, and a store data unit, each of which is coupled to the data TLB unit 872 in the memory unit 870. The instruction cache unit 834 is further coupled to a level 2 (L2) cache unit 876 in the memory unit 870. The L2 cache unit 876 is coupled to one or more other levels of cache and eventually to a main memory.

By way of example, the exemplary register renaming, out-of-order issue/execution core architecture may implement the pipeline 800 as follows: 1) the instruction fetch 838 performs the fetch and length decoding stages 802 and 804; 2) the decode unit 840 performs the decode stage 806; 3) the rename/allocator unit 852 performs the allocation stage 808 and renaming stage 810; 4) the scheduler unit(s) 856 performs the schedule stage 812; 5) the physical register file(s) unit(s) 858 and the memory unit 870 perform the register read/memory read stage 814; the execution cluster 860 perform the execute stage 816; 6) the memory unit 870 and the physical register file(s) unit(s) 858 perform the write back/memory write stage 818; 7) various units may be involved in the exception handling stage 822; and 8) the retirement unit 854 and the physical register file(s) unit(s) 858 perform the commit stage 824.

The core 890 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 890 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyper-Threading technology).

While register renaming is described in the context of out-of-order execution, it should be understood that register renaming may be used in an in-order architecture. While the illustrated embodiment of the processor also includes separate instruction and data cache units 834/874 and a shared L2 cache unit 876, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

**Specific Exemplary In-Order Core Architecture**

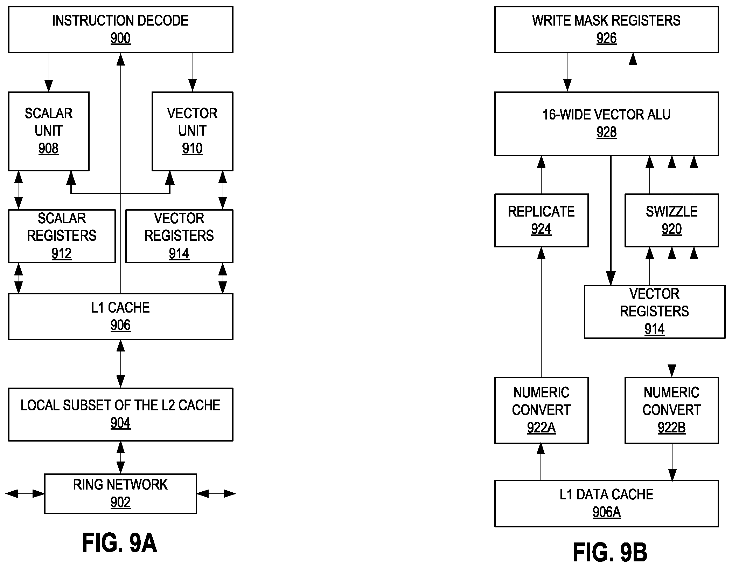

**Figures 9A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic,

memory I/O interfaces, and other necessary I/O logic, depending on the application.

**Figure 9A** is a block diagram of a single processor core, along with its connection to the on-die interconnect network 902 and with its local subset of the Level 2 (L2) cache 904, according to embodiments of the disclosure. In one embodiment, an instruction decode unit 900 supports the x86 instruction set with a packed data instruction set extension. An L1 cache 906 allows low-latency accesses to cache memory into the scalar and vector units. While in one embodiment (to simplify the design), a scalar unit 908 and a vector unit 910 use separate register sets (respectively, scalar registers 912 and vector registers 914) and data transferred between them is written to memory and then read back in from a level 1 (L1) cache 906, alternative embodiments of the disclosure may use a different approach (e.g., use a single register set or include a communication path that allow data to be transferred between the two register files without being written and read back).

The local subset of the L2 cache 904 is part of a global L2 cache that is divided into separate local subsets, one per processor core. Each processor core has a direct access path to its own local subset of the L2 cache 904. Data read by a processor core is stored in its L2 cache subset 904 and can be accessed quickly, in parallel with other processor cores accessing their own local L2 cache subsets. Data written by a processor core is stored in its own L2 cache subset 904 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 9B** is an expanded view of part of the processor core in **Figure 9A** according to embodiments of the disclosure. **Figure 9B** includes an L1 data cache 906A part of the L1 cache 904, as well as more detail regarding the vector unit 910 and the vector registers 914. Specifically, the vector unit 910 is a 16-wide vector processing unit (VPU) (see the 16-wide ALU 928), which executes one or more of integer, single-precision float, and double-precision float instructions. The VPU supports swizzling the register inputs with swizzle unit 920, numeric conversion with numeric convert units 922A-B, and replication with replication unit 924 on the memory input. Write mask registers 926 allow predicating resulting vector writes.

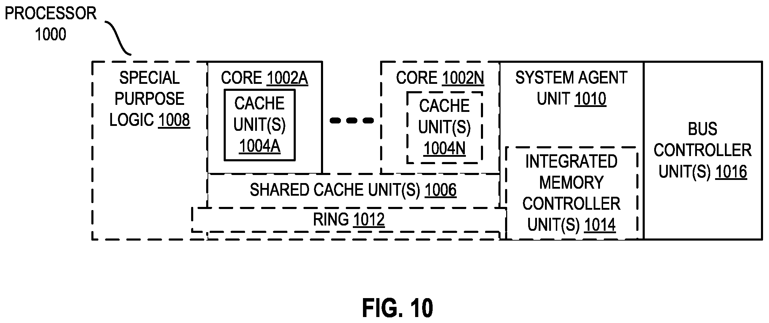

**Figure 10** is a block diagram of a processor 1000 that may have more than one core, may have an integrated memory controller, and may have integrated graphics according to embodiments of the disclosure. The solid lined boxes in **Figure 10** illustrate a processor 1000 with a single core 1002A, a system agent 1010, a set of one or more bus controller units 1016, while the optional addition of the dashed lined boxes illustrates an alternative processor 1000 with multiple cores 1002A-N, a set of one or more integrated memory controller unit(s) 1014 in the system agent unit 1010, and special purpose logic 1008.

Thus, different implementations of the processor 1000 may include: 1) a CPU with the special purpose logic 1008 being integrated graphics and/or scientific (throughput) logic (which may include one or more cores), and the cores 1002A-N being one or more general purpose cores (e.g., general purpose in-order cores, general purpose out-of-order cores, a combination of the two); 2) a coprocessor with the cores 1002A-N being a large number of special purpose cores intended primarily for graphics and/or scientific (throughput); and 3) a coprocessor with the cores 1002A-N being a large number of general purpose in-order cores. Thus, the processor 1000 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1000 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1006, and external memory (not shown) coupled to the set of integrated memory controller units 1014. The set of shared cache units 1006 may include one or more mid-level caches, such as level 2 (L2), level 3 (L3), level 4 (L4), or other levels of cache, a last level cache (LLC), and/or combinations thereof. While in one embodiment a ring based interconnect unit 1012 interconnects the integrated graphics logic 1008, the set of shared cache units 1006, and the system agent unit 1010/integrated memory controller unit(s) 1014, alternative embodiments may use any number of well-known techniques for interconnecting such units. In one embodiment, coherency is maintained between one or more cache units 1006 and cores 1002-A-N.

In some embodiments, one or more of the cores 1002A-N are capable of multithreading. The system agent 1010 includes those components coordinating and operating cores 1002A-N. The system agent unit 1010 may include for example a power control unit (PCU) and a display unit. The PCU may be or include logic and components needed for regulating the power state of the cores 1002A-N and the integrated graphics logic 1008. The display unit is for driving one or more externally connected displays.

The cores 1002A-N may be homogenous or heterogeneous in terms of architecture instruction set; that is, two or more of the cores 1002A-N may be capable of execution the same instruction set, while others may be capable of executing only a subset of that instruction set or a different instruction set.

## Exemplary Computer Architectures

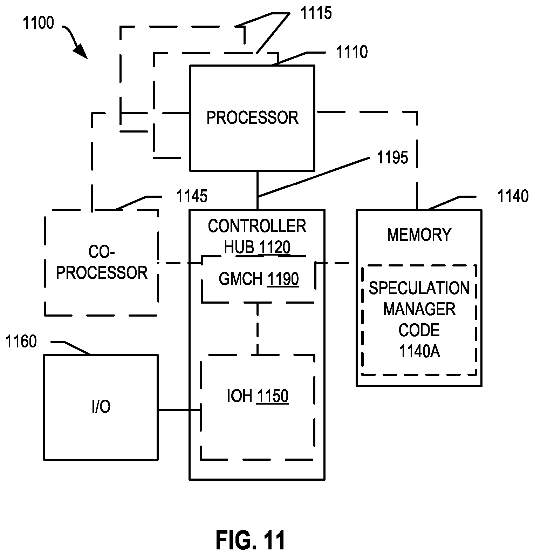

**Figures 11-14** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 11,** shown is a block diagram of a system 1100 in accordance with one embodiment of the present disclosure. The system 1100 may include one or more processors 1110, 1115, which are coupled to a controller hub 1120. In one embodiment the controller hub 1120 includes a graphics memory controller hub (GMCH) 1190 and an Input/Output Hub (IOH) 1150 (which may be on separate chips); the GMCH 1190 includes memory and graphics controllers to which are coupled memory 1140 and a coprocessor 1145; the IOH 1150 is couples input/output (I/O) devices 1160 to the GMCH 1190. Alternatively, one or both of the memory and graphics controllers are integrated within the processor (as described herein), the memory 1140 and the coprocessor 1145 are coupled directly to the processor 1110, and the controller hub 1120 in a single chip with the IOH 1150. Memory 1140 may include a speculation manager code 1140A, for example, to store code that when executed causes a processor to perform any method of this disclosure.

The optional nature of additional processors 1115 is denoted in **Figure 11** with broken lines. Each processor 1110, 1115 may include one or more of the processing cores described herein and may be some version of the processor 1000.

The memory 1140 may be, for example, dynamic random access memory (DRAM), phase change memory (PCM), or a combination of the two. For at least one embodiment, the controller hub 1120 communicates with the processor(s) 1110, 1115 via a multi-drop bus, such as a frontside bus (FSB), point-to-point interface such as Quickpath Interconnect (QPI), or similar connection 1195.

In one embodiment, the coprocessor 1145 is a special-purpose processor, such as, for example, a high-throughput MIC processor, a network or communication processor, compression engine, graphics processor, GPGPU, embedded processor, or the like. In one embodiment, controller hub 1120 may include an integrated graphics accelerator.

There can be a variety of differences between the physical resources 1110, 1115 in terms of a spectrum of metrics of merit including architectural, microarchitectural, thermal, power consumption characteristics, and the like.

In one embodiment, the processor 1110 executes instructions that control data processing operations of a general type. Embedded within the instructions may be coprocessor instructions. The processor 1110 recognizes these coprocessor instructions as being of a type that should be executed by the attached coprocessor 1145. Accordingly, the processor 1110 issues these coprocessor instructions (or control signals representing coprocessor instructions) on a coprocessor bus or other interconnect, to coprocessor 1145. Coprocessor(s) 1145 accept and execute the received coprocessor instructions.

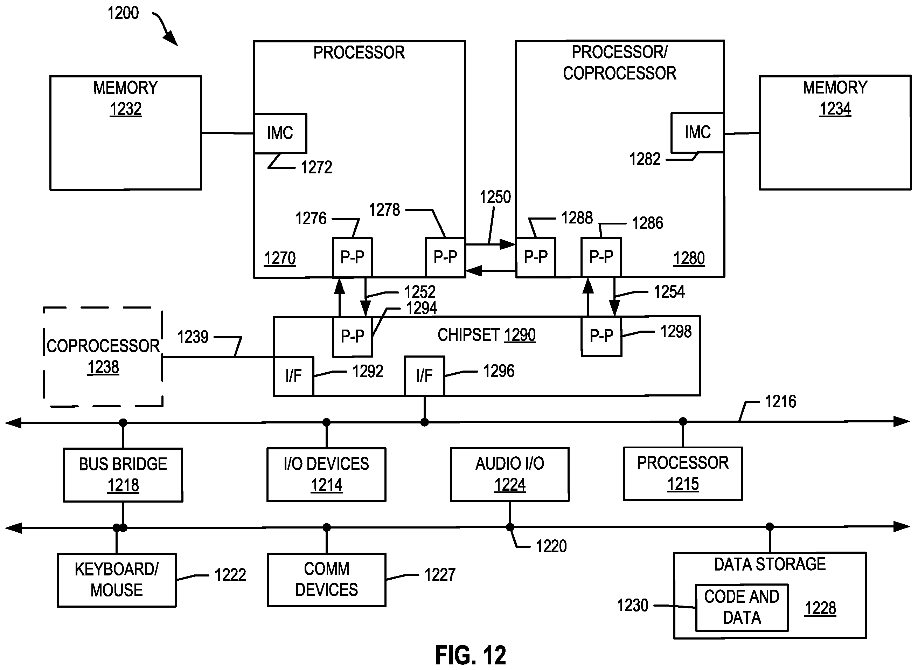

Referring now to **Figure 12,** shown is a block diagram of a first more specific exemplary system 1200 in accordance with an embodiment of the present disclosure. As shown in **Figure 12,** multiprocessor system 1200 is a point-to-point interconnect system, and includes a first processor 1270 and a second processor 1280 coupled via a point-to-point interconnect 1250. Each of processors 1270 and 1280 may be some version of the processor 1000. In one embodiment of the disclosure, processors 1270 and 1280 are respectively processors 1110 and 1115, while coprocessor 1238 is coprocessor 1145. In another embodiment, processors 1270 and 1280 are respectively processor 1110 coprocessor 1145.

Processors 1270 and 1280 are shown including integrated memory controller (IMC) units 1272 and 1282, respectively. Processor 1270 also includes as part of its bus controller units point-to-point (P-P) interfaces 1276 and 1278; similarly, second processor 1280 includes P-P interfaces 1286 and 1288. Processors 1270, 1280 may exchange information via a point-to-point (P-P) interface 1250 using P-P interface circuits 1278, 1288. As shown in **Figure 12,** IMCs 1272 and 1282 couple the processors to respective memories, namely a memory 1232 and a memory 1234, which may be portions of main memory locally attached to the respective processors.

Processors 1270, 1280 may each exchange information with a chipset 1290 via individual P-P interfaces 1252, 1254 using point to point interface circuits 1276, 1294, 1286, 1298. Chipset 1290 may optionally exchange information with the coprocessor 1238 via a high-performance interface 1239. In one embodiment, the coprocessor 1238 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1290 may be coupled to a first bus 1216 via an interface 1296. In one embodiment, first bus 1216 may be a Peripheral Component Interconnect (PCI) bus, or a bus such as a PCI Express bus or another third generation I/O interconnect bus, although the scope of the present disclosure is not so limited.

As shown in **Figure 12,** various I/O devices 1214 may be coupled to first bus 1216, along with a bus bridge 1218

which couples first bus 1216 to a second bus 1220. In one embodiment, one or more additional processor(s) 1215, such as coprocessors, high-throughput MIC processors, GPGPU's, accelerators (such as, e.g., graphics accelerators or digital signal processing (DSP) units), field programmable gate arrays, or any other processor, are coupled to first bus 1216. In one embodiment, second bus 1220 may be a low pin count (LPC) bus. Various devices may be coupled to a second bus 1220 including, for example, a keyboard and/or mouse 1222, communication devices 1227 and a storage unit 1228 such as a disk drive or other mass storage device which may include instructions/code and data 1230, in one embodiment. Further, an audio I/O 1224 may be coupled to the second bus 1220. Note that other architectures are possible. For example, instead of the point-to-point architecture of **Figure 12,** a system may implement a multi-drop bus or other such architecture.

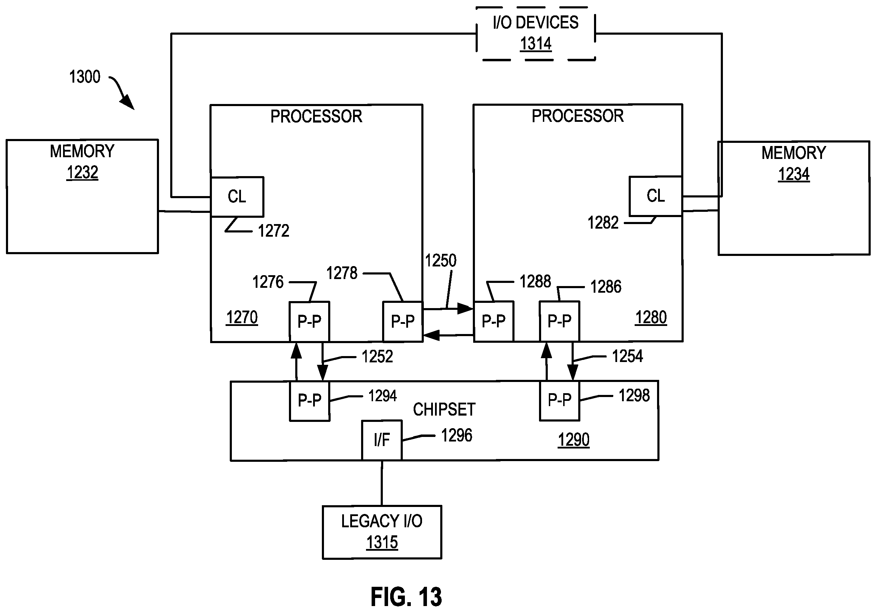

Referring now to **Figure 13,** shown is a block diagram of a second more specific exemplary system 1300 in accordance with an embodiment of the present disclosure. Like elements in **Figures 12 and 13** bear like reference numerals, and certain aspects of **Figure 12** have been omitted from **Figure 13** in order to avoid obscuring other aspects of **Figure 13.**

**Figure 13** illustrates that the processors 1270, 1280 may include integrated memory and I/O control logic ("CL") 1272 and 1282, respectively. Thus, the CL 1272, 1282 include integrated memory controller units and include I/O control logic. **Figure 13** illustrates that not only are the memories 1232, 1234 coupled to the CL 1272, 1282, but also that I/O devices 1314 are also coupled to the control logic 1272, 1282. Legacy I/O devices 1315 are coupled to the chipset 1290.

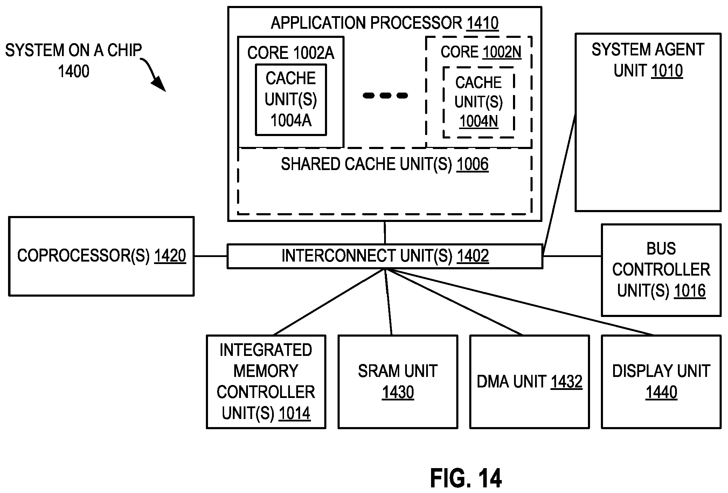

Referring now to **Figure 14,** shown is a block diagram of a SoC 1400 in accordance with an embodiment of the present disclosure. Similar elements in **Figure 10** bear like reference numerals. Also, dashed lined boxes are optional features on more advanced SoCs. In **Figure 14,** an interconnect unit(s) 1402 is coupled to: an application processor 1410 which includes a set of one or more cores 202A-N and shared cache unit(s) 1006; a system agent unit 1010; a bus controller unit(s) 1016; an integrated memory controller unit(s) 1014; a set or one or more coprocessors 1420 which may include integrated graphics logic, an image processor, an audio processor, and a video processor; an static random access memory (SRAM) unit 1430; a direct memory access (DMA) unit 1432; and a display unit 1440 for coupling to one or more external displays. In one embodiment, the coprocessor(s) 1420 include a special-purpose processor, such as, for example, a network or communication processor, compression engine, GPGPU, a high-throughput MIC processor, embedded processor, or the like.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code, such as code 1230 illustrated in **Figure 12,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

**Emulation (including binary translation, code morphing, etc.)**

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

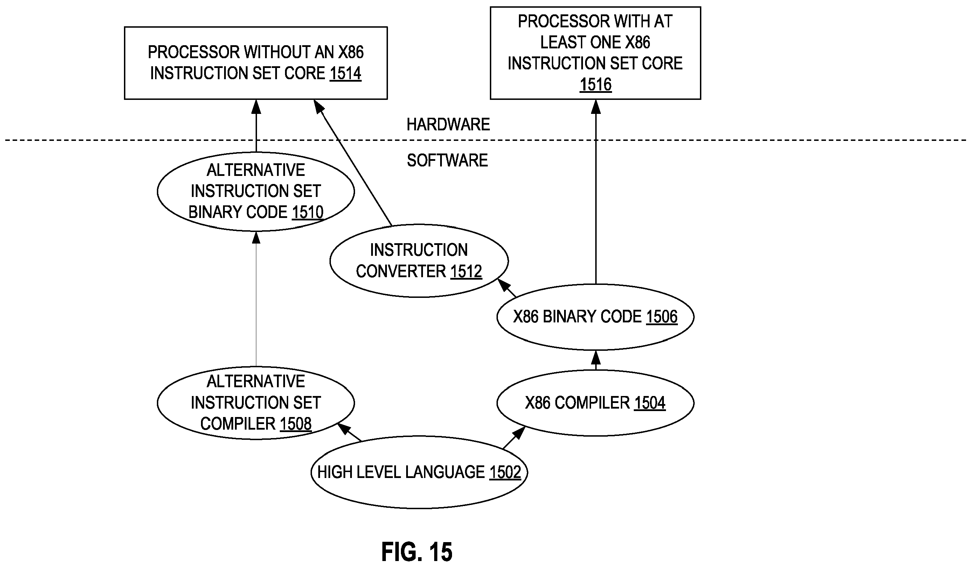

**Figure 15** is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or various combinations thereof. **Figure 15** shows a program in a high level language 1502 may be compiled using an x86 compiler 1504 to generate x86 binary code 1506 that may be natively executed by a processor with at least one x86 instruction set core 1516. The processor with at least one x86 instruction set core 1516 represents any processor that can perform substantially the same functions as an Intel® processor with at least one x86 instruction set core by compatibly executing or otherwise processing (1) a substantial portion of the instruction set of the Intel® x86 instruction set core or (2) object code versions of applications or other software targeted to run on an Intel® processor with at least one x86 instruction set core, in order to achieve substantially the same result as an Intel® processor with at least one x86 instruction set core. The x86 compiler 1504 represents a compiler that is operable to generate x86 binary code 1506 (e.g., object code) that can, with or without additional linkage processing, be executed on the processor with at least one x86 instruction set core 1516. Similarly, **Figure 15** shows the program in the high level language 1502 may be compiled using an alternative instruction set compiler 1508 to generate alternative instruction set binary code 1510 that may be natively executed by a processor without at least one x86 instruction set core 1514 (e.g., a processor with cores that execute the MIPS instruction set of MIPS Technologies of Sunnyvale, CA and/or that execute the ARM instruction set of ARM Holdings of Sunnyvale, CA). The instruction converter 1512 is used to convert the x86 binary code 1506 into code that may be natively executed by the processor without an x86 instruction set core 1514. This converted code is not likely to be the same as the alternative instruction set binary code 1510 because an instruction converter capable of this is difficult to make; however, the converted code will accomplish the general operation and be made up of instructions from the alternative instruction set. Thus, the instruction converter 1512 represents software, firmware, hardware, or a combination thereof that, through emulation, simulation or any other process, allows a processor or other electronic device that does not have an x86 instruction set processor or core to execute the x86 binary code 1506.

## Claims

**1.** An apparatus comprising:

a decoder (146) to decode a security check instruction into a decoded security check instruction, the security check instruction for checking security of an operation of an instruction to be executed;
a speculation manager circuit (110) to:

detect a security check field in the security check instruction, the field comprising a hint indicating that one or more security checks of the security check instruction are only needed when the operation being checked may potentially be mis-speculated;
determine a security check policy, to be enforced for potentially mis-speculated execution, from a plurality of security check policies (112) based on the security check instruction,
schedule the security check instruction for execution when it is determined that the operation is not deemed safe, and
elide the security check instruction when it is determined that the operation is deemed safe; and

an execution unit (154) to execute the security check instruction that is scheduled for execution.

**2.** The apparatus of claim 1, wherein the security check field is a compiler provided hint.

**3.** The apparatus of any one of claims 1-2, wherein the operation comprises a set of associated memory accesses and wherein it is determined whether the operation is deemed safe or not by determining whether the one or more memory accesses have already been deemed safe.

4. The apparatus of any one of claims 1-3, wherein the security check policy is a memory safety check policy (114).

5. The apparatus of any one of claims 1-3, wherein the security check policy is a type safety check policy (116).

6. The apparatus of claim 1, wherein the one or more associated checks of the security check policy comprise a memory safety check and a type safety check.

7. The apparatus of claim 1, wherein the one or more associated checks are less than a full conformance check for an architectural specification of the apparatus.

8. The apparatus of claim 1, wherein it is determined whether the operation is deemed safe or not by determining whether the instruction to be checked is known to be safe.

9. A method comprising:

decoding (402) a security check instruction into a decoded security check instruction with a decoder of a hardware processor, the security check instruction for checking security of an operation of an instruction to be executed;
detecting (404) a security check field in the security check instruction by the hardware processor, the field comprising a hint indicating that one or more security checks of the security check instruction are only needed when the operation being checked may potentially be mis-speculated;
determining (406) a security check policy, to be enforced for potentially mis-speculated execution, from a plurality of security check policies based on the security check instruction by the hardware processor;
scheduling (410) the security check instruction for execution when it is determined that the operation is not deemed safe by the hardware processor;
eliding (412) the security check instruction when it is determined that the operation is deemed safe by the hardware processor; and
executing (414) the security check instruction that is scheduled for execution with an execution unit of the hardware processor.

10. The method of claim 9, wherein the security check field is a compiler provided hint.

11. The method of any one of claims 9-10, wherein the operation comprises a set of associated memory accesses and wherein it is determined whether the operation is deemed safe or not by determining whether the one or more memory accesses have already been deemed safe.

12. The method of any one of claims 9-11, wherein the security check policy is a memory safety check policy.

13. The method of any one of claims 9-11, wherein the security check policy is a type safety check policy.

14. The method of claim 9, wherein the one or more associated checks of the security check policy comprise a memory safety check and a type safety check.

15. The method of claim 9, wherein it is determined whether the operation is deemed safe or not by determining whether the instruction to be checked is known to be safe.

## Patentansprüche

1. Einrichtung, die Folgendes umfasst:

einen Decodierer (146) zum Decodieren einer Sicherheitsprüfungsanweisung in eine decodierte Sicherheitsprüfungsanweisung, wobei die Sicherheitsprüfungsanweisung zum Prüfen der Sicherheit einer Operation einer auszuführenden Anweisung dient;
eine Spekulationsverwalterschaltung (110) für Folgendes:

Detektieren eines Sicherheitsprüfungsfelds in der Sicherheitsprüfungsanweisung, wobei das Feld einen Hinweis umfasst, der angibt, dass eine oder mehrere Sicherheitsprüfungen der Sicherheitsprüfungsanweisung nur erforderlich sind, wenn die geprüfte Operation potenziell fehlspekuliert sein kann;

Bestimmen einer Sicherheitsprüfungsrichtlinie, die für eine potenziell fehlspekulierte Ausführung durchzusetzen ist, aus mehreren Sicherheitsprüfungsrichtlinien (112) basierend auf der Sicherheitsprüfungsanweisung,
Planen der Sicherheitsprüfungsanweisung zur Ausführung, wenn bestimmt wird, dass die Operation nicht als sicher angesehen wird, und
Auslassen der Sicherheitsprüfungsanweisung, wenn bestimmt wird, dass die Operation als sicher angesehen wird; und
eine Ausführungseinheit (154) zum Ausführen der Sicherheitsprüfungsanweisung, die zur Ausführung geplant ist.

**2.** Einrichtung nach Anspruch 1, wobei das Sicherheitsprüfungsfeld ein von einem Compiler bereitgestellter Hinweis ist.

**3.** Einrichtung nach einem der Ansprüche 1-2, wobei die Operation einen Satz zugeordneter Speicherzugriffe umfasst und wobei bestimmt wird, ob die Operation als sicher angesehen wird oder nicht, indem bestimmt wird, ob der eine oder die mehreren Speicherzugriffe bereits als sicher angesehen worden sind.

**4.** Einrichtung nach einem der Ansprüche 1-3, wobei die Sicherheitsprüfungsrichtlinie eine Speichersicherheitsprüfungsrichtlinie (114) ist.

**5.** Einrichtung nach einem der Ansprüche 1-3, wobei die Sicherheitsprüfungsrichtlinie eine Typsicherheitsprüfungsrichtlinie (116) ist.

**6.** Einrichtung nach Anspruch 1, wobei die eine oder die mehreren zugeordneten Prüfungen der Sicherheitsprüfungsrichtlinie eine Speichersicherheitsprüfung und eine Typsicherheitsprüfung umfassen.

**7.** Einrichtung nach Anspruch 1, wobei die eine oder die mehreren zugeordneten Prüfungen weniger als eine vollständige Konformitätsprüfung für eine Architekturspezifikation der Einrichtung sind.

**8.** Einrichtung nach Anspruch 1, wobei bestimmt wird, ob die Operation als sicher angesehen wird oder nicht, indem bestimmt wird, ob die zu prüfende Anweisung als sicher bekannt ist.

**9.** Verfahren, das Folgendes umfasst:

Decodieren (402) einer Sicherheitsprüfungsanweisung in eine decodierte Sicherheitsprüfungsanweisung mit einem Decodierer eines Hardwareprozessors, wobei die Sicherheitsprüfungsanweisung zum Prüfen der Sicherheit einer Operation einer auszuführenden Anweisung dient;
Detektieren (404) eines Sicherheitsprüfungsfelds in der Sicherheitsprüfungsanweisung durch den Hardwareprozessor, wobei das Feld einen Hinweis umfasst, der angibt, dass eine oder mehrere Sicherheitsprüfungen der Sicherheitsprüfungsanweisung nur erforderlich sind, wenn die geprüfte Operation potenziell fehlspekuliert sein kann;
Bestimmen (406) einer Sicherheitsprüfungsrichtlinie, die für eine potenziell fehlspekulierte Ausführung durchzusetzen ist, aus mehreren Sicherheitsprüfungsrichtlinien basierend auf der Sicherheitsprüfungsanweisung durch den Hardwareprozessor;
Planen (410) der Sicherheitsprüfungsanweisung zur Ausführung, wenn bestimmt wird, dass die Operation durch den Hardwareprozessor nicht als sicher angesehen wird;
Auslassen (412) der Sicherheitsprüfungsanweisung, wenn bestimmt wird, dass die Operation durch den Hardwareprozessor als sicher angesehen wird; und
Ausführen (414) der Sicherheitsprüfungsanweisung, die zur Ausführung mit einer Ausführungseinheit des Hardwareprozessors geplant ist.

**10.** Verfahren nach Anspruch 9, wobei das Sicherheitsprüfungsfeld ein von einem Compiler bereitgestellter Hinweis ist.

**11.** Verfahren nach einem der Ansprüche 9-10, wobei die Operation einen Satz zugeordneter Speicherzugriffe umfasst und wobei bestimmt wird, ob die Operation als sicher angesehen wird oder nicht, indem bestimmt wird, ob der eine oder die mehreren Speicherzugriffe bereits als sicher angesehen worden sind.

**12.** Verfahren nach einem der Ansprüche 9-11, wobei die Sicherheitsprüfungsrichtlinie eine Speichersicherheitsprüfungsrichtlinie ist.

**13.** Verfahren nach einem der Ansprüche 9-11, wobei die Sicherheitsprüfungsrichtlinie eine Typsicherheitsprüfungsrichtlinie ist.

**14.** Verfahren nach Anspruch 9, wobei die eine oder die mehreren zugeordneten Prüfungen der Sicherheitsprüfungsrichtlinie eine Speichersicherheitsprüfung und eine Typsicherheitsprüfung umfassen.

**15.** Verfahren nach Anspruch 9, wobei bestimmt wird, ob die Operation als sicher angesehen wird oder nicht, indem bestimmt wird, ob die zu prüfende Anweisung als sicher bekannt ist.

## Revendications

**1.** Appareil comprenant :

un décodeur (146) pour décoder une instruction de contrôle de sécurité en une instruction de contrôle de sécurité décodée, l'instruction de contrôle de sécurité permettant de vérifier la sécurité d'une opération d'une instruction à exécuter ;
un circuit de gestion de spéculation (110) pour :

détecter un champ de contrôle de sécurité dans l'instruction de contrôle de sécurité, le champ comprenant une indication indiquant qu'un ou plusieurs contrôles de sécurité de l'instruction de contrôle de sécurité ne sont nécessaires uniquement lorsqu'il existe un risque que l'opération contrôlée résulte d'une spéculation erronée ;
déterminer une politique de contrôle de sécurité, à appliquer pour une exécution résultant d'une spéculation erronée, à partir d'une pluralité de politiques de contrôle de sécurité (112) sur la base de l'instruction de contrôle de sécurité,
planifier l'exécution de l'instruction de contrôle de sécurité lorsqu'il est déterminé que l'opération n'est pas considérée comme sûre, et
éliminer l'instruction de contrôle de sécurité lorsqu'il est déterminé que l'opération est considérée comme sûre ; et
une unité d'exécution (154) pour exécuter l'instruction de contrôle de sécurité qui est programmée pour exécution.

**2.** Appareil selon la revendication 1, dans lequel le champ de contrôle de sécurité est une indication fournie par un compilateur.

**3.** Appareil selon l'une quelconque des revendications 1 et 2, dans lequel l'opération comprend un ensemble d'accès à la mémoire associés et dans lequel il est déterminé si l'opération est jugée sûre ou non en déterminant si les un ou plusieurs accès à la mémoire ont déjà été jugés sûrs.

**4.** Appareil selon l'une quelconque des revendications 1 à 3, dans lequel la politique de contrôle de sécurité est une politique de contrôle de sécurité de mémoire (114).

**5.** Appareil selon l'une quelconque des revendications 1 à 3, dans lequel la politique de contrôle de sécurité est une politique de contrôle de sécurité de type (116).

**6.** Appareil selon la revendication 1, dans lequel les un ou plusieurs contrôles associés de la politique de contrôle de sécurité comprennent un contrôle de sécurité de mémoire et un contrôle de sécurité de type.

**7.** Appareil selon la revendication 1, dans lequel les un ou plusieurs contrôles associés sont inférieurs à un contrôle de conformité complet pour une spécification architecturale de l'appareil.

**8.** Appareil selon la revendication 1, dans lequel il est déterminé si l'opération est jugée sûre ou non en déterminant si l'instruction à vérifier est connue comme étant sûre.

**9.** Procédé comprenant les étapes suivantes :

décoder (402) une instruction de contrôle de sécurité en une instruction de contrôle de sécurité décodée avec un

décodeur d'un processeur matériel, l'instruction de contrôle de sécurité permettant de vérifier la sécurité d'une opération d'une instruction à exécuter ;
détecter (404) un champ de contrôle de sécurité dans l'instruction de contrôle de sécurité par le processeur matériel, le champ comprenant une indication indiquant qu'un ou plusieurs contrôles de sécurité de l'instruction de contrôle de sécurité ne sont nécessaires uniquement lorsqu'il existe un risque que l'opération contrôlée résulte d'une spéculation erronée ;
déterminer (406) une politique de contrôle de sécurité, à appliquer pour une exécution résultant d'une spéculation erronée, à partir d'une pluralité de politiques de contrôle de sécurité sur la base de l'instruction de contrôle de sécurité par le processeur matériel ;
programmer (410) l'instruction de contrôle de sécurité pour exécution lorsqu'il est déterminé que l'opération n'est pas jugée sûre par le processeur matériel ;
éliminer (412) l'instruction de contrôle de sécurité lorsqu'il est déterminé que l'opération est considérée comme sûre par le processeur matériel ; et
exécuter (414) l'instruction de contrôle de sécurité qui est programmée pour exécution avec une unité d'exécution du processeur matériel.

**10.** Procédé selon la revendication 9, dans lequel le champ de contrôle de sécurité est une indication fournie par un compilateur.

**11.** Procédé selon l'une quelconque des revendications 9 et 10, dans lequel l'opération comprend un ensemble d'accès à la mémoire associés et dans lequel il est déterminé si l'opération est jugée sûre ou non en déterminant si les un ou plusieurs accès à la mémoire ont déjà été jugés sûrs.

**12.** Procédé selon l'une quelconque des revendications 9 à 11, dans lequel la politique de contrôle de sécurité est une politique de contrôle de sécurité de mémoire.

**13.** Procédé selon l'une quelconque des revendications 9 à 11, dans lequel la politique de contrôle de sécurité est une politique de contrôle de sécurité de type.

**14.** Procédé selon la revendication 9, dans lequel les un ou plusieurs contrôles associés de la politique de contrôle de sécurité comprennent un contrôle de sécurité de mémoire et un contrôle de sécurité de type.

**15.** Procédé selon la revendication 9, dans lequel il est déterminé si l'opération est jugée sûre ou non en déterminant si l'instruction à vérifier est connue comme étant sûre.

FIG. 1
COMPUTER SYSTEM 100
NETWORK DEVICE 101
I/O (E.G., KEYBOARD) 103
DISPLAY 105
MEMORY 102
COMPILER CODE 104
CODE WITH HINTS ADDED 106
SYSTEM BUS 107
PROCESSOR CORE 109(1...N)
IP GEN STAGE 111
FETCH STAGE 130
DECODE STAGE 140
EXECUTION STAGE 150
115A
135
115
+X
113A
113
BRANCH PREDICTOR 120
BTB 124
SPECULATION MANAGER 110
SECURITY CHECK POLICIES 112
MEMORY SAFETY CHECK POLICY 114
TYPE SAFETY CHECK POLICY 116
112B
128A
INSTRUCTION CACHE 132
0
1
133
INSTRUCTION FETCH UNIT 134
137
128
110A
152
155
BAC 142
RSB 144
+X
145
DECODER 146
SCHEDULER 147
EXECUTION UNIT(S) 154
BRU 156
BRANCH REGS. 158
GENERAL PURPOSE (E.G., DATA) REGISTERS 108

200

RECEIVE A REQUEST TO EXECUTE A SECURITY CHECK INSTRUCTION WITH A HINT (E.G., A SECURITY CHECK FIELD) 202
HAVE ALL ASSOCIATED ACCESSES ALREADY BEEN DEEMED SAFE? 204
YES
SKIP (E.G., ELIDE) EXECUTION OF THE SECURITY CHECK INSTRUCTION 206
NO
EXECUTE THE SECURITY CHECK INSTRUCTION 208

FIG. 2

300
CODE (E.G., FROM COMPILER) INCLUDES A MEMORY ACCESS AND AN ASSOCIATED SECURITY CHECK INSTRUCTION(S) 302
IF THE ACCESS IS DEEMED SAFE, IS IT POSSIBLE FOR AN APPLICABLE SECURITY POLICY TO BE VIOLATED? 304
NO
EMIT A HINT (E.G., AS A SECURITY CHECK FIELD OF THE SECURITY CHECK INSTRUCTION) INTO THE CODE 306
YES
DO NOT EMIT A HINT (E.G., AS A SECURITY CHECK FIELD OF THE SECURITY CHECK INSTRUCTION) INTO THE CODE (E.G., SO THAT THE SECURITY CHECK INSTRUCTION IS EXECUTED) 308

FIG. 3

400

DECODING AN INSTRUCTION INTO A DECODED INSTRUCTION WITH A DECODER OF A HARDWARE PROCESSOR 402

DETECTING A SECURITY CHECK FIELD IN THE INSTRUCTION BY THE HARDWARE PROCESSOR 404

DETERMINING A SECURITY CHECK POLICY, TO BE ENFORCED FOR POTENTIALLY MIS-SPECULATED EXECUTION, FROM A PLURALITY OF SECURITY CHECK POLICIES BASED ON THE SECURITY CHECK FIELD BY THE HARDWARE PROCESSOR 406

PERFORMING ONE OR MORE ASSOCIATED CHECKS OF THE SECURITY CHECK POLICY BY THE HARDWARE PROCESSOR ON THE INSTRUCTION TO DETERMINE WHETHER THE INSTRUCTION IS POTENTIALLY MIS-SPECULATED 408

SCHEDULING THE INSTRUCTION FOR EXECUTION WHEN THE INSTRUCTION IS NOT DEEMED SAFE BY THE HARDWARE PROCESSOR ACCORDING TO THE ONE OR MORE ASSOCIATED CHECKS 410

ELIDING THE INSTRUCTION WHEN THE INSTRUCTION IS DEEMED SAFE BY THE HARDWARE PROCESSOR ACCORDING TO THE ONE OR MORE ASSOCIATED CHECKS 412

EXECUTING THE INSTRUCTION THAT IS SCHEDULED FOR EXECUTION WITH AN EXECUTION UNIT OF THE HARDWARE PROCESSOR 414

FIG. 4

FIG.5A
FULL OPCODE FIELD 574
FORMAT FIELD 540
BASE OPERATION FIELD 542
REGISTER INDEX FIELD 544
MODIFIER FIELD 546
AUGMENTATION OPERATION FIELD 550
CLASS FIELD 568
ALPHA FIELD 552
BETA FIELD 554
SCALE FIELD 560
DISP. F. 562A
DISP. F. F. 562B
DATA ELEMENT WIDTH FIELD 564
WRITE MASK FIELD 570
IMMEDIATE FIELD 572
GENERIC VECTOR FRIENDLY INSTRUCTION FORMAT 500
NO MEMORY ACCESS 505
NO MEMORY ACCESS, FULL ROUND CNTRL TYPE OP. 510
RS FIELD 552A
NO MEMORY ACCESS 546A
CLASS A 568A
ROUND 552A.1
ROUND CONTROL FIELD 554A
SAE FIELD 556
ROUND OPERATION FIELD 558
NO MEMORY ACCESS, DT TYPE OPERATION 515
DATA TRANSFORM 552A.2
DATA TRANSFORM FIELD 554B
MEMORY ACCESS 520
MEMORY ACCESS, TEMPORAL 525
EVICTION HINT (EH) FIELD 552B
MEMORY ACCESS 546B
TEMPORAL 552B.1
DATA MANIPULATION FIELD 554C
MEMORY ACCESS, NONTEMPORAL 530
NON-TEMPORAL 552B.2

FIG. 5B
FULL OPCODE FIELD 574
FORMAT FIELD 540
BASE OPERATION FIELD 542
REGISTER INDEX FIELD 544
MODIFIER FIELD 546
AUGMENTATION OPERATION FIELD 550
CLASS FIELD 568
ALPHA FIELD 552
BETA FIELD 554
SCALE FIELD 560
DISP. F. 562A
DISP. F. F. 562B
DATA ELEMENT WIDTH FIELD 564
WRITE MASK FIELD 570
IMMEDIATE FIELD 572
GENERIC VECTOR FRIENDLY INSTRUCTION FORMAT 500
NO MEMORY ACCESS 505
RL FIELD 557A
NO MEM. ACC., W.M.C., PART. RND. CNTRL. TYPE OP. 512
NO MEMORY ACCESS 546A
CLASS B 568B
WRITE MASK CONTROL FIELD 552C
RND 557A.1
ROUND OPERATION FIELD 559A
NO MEM. ACC., W.M.C., VSIZE TYPE OP. 517
VSIZE 557A.2
VECTOR LENGTH FIELD 559B
MEMORY ACCESS 520
MEM. ACC, W.M.C., 527
MEMORY ACCESS 546B
BROAD CAST FIELD 557B

FIG. 6A
EVEX PREFIX 602
DATA ELEMENT WIDTH FIELD 564
REX' 610
CLASS FIELD 568
BETA FIELD 554
REX' 610
MOD R/M BYTE
7 6 5 3 2 0
MOD 642
REG 644
R/M 646
SIB BYTE
7 6 5 3 2 0
SS 652
XXX 654
BBB 656
DISPLACEMENT FIELD 562A (DISP32 WHEN MOD=10)
0x62 R X B R' M M M M W V V V V U P P α β β β V' K K K Y Y Y Y Y Y Y Y MOD R/M SIB D D D D IMM8
FORMAT FIELD 540
REX 605
OPCODE MAP 615
VVVV FIELD 620
PREFIX ENCODING FIELD 625
ALPHA FIELD 552
WRITE MASK FIELD 570
REAL OPCODE FIELD 630
640
650
572
DISPLACEMENT FACTOR FIELD 562B (DISP8*N WHEN MOD=01). REFERRED TO AS DISP8*N, BUT HOLDS ONLY THE DISPLACEMENT FACTOR WHICH IS MULTIPLIED BY N
SPECIFIC VECTOR FRIENDLY INSTRUCTION FORMAT 600
FIG. 6B
FULL OPCODE FIELD 574
FORMAT FIELD 540
OPCODE MAP 615
DATA ELEMENT WIDTH FIELD 564
0x62 P P M M M M W Y Y Y Y Y Y Y Y
PREFIX ENCODING FIELD 625
BASE OPERATION FIELD 542
REAL OPCODE FIELD 630
FIG. 6C
REGISTER INDEX FIELD 544
R X B R' V' REG R/M V V V V XXX BBB
REX 605
REX' 610
644
646
VVVV FIELD 620
654
656

FIG. 6D
CLASS FIELD 568
ALPHA FIELD 552
BETA FIELD 554
AUGMENTATION OPERATION FIELD 550
U α β β β
U=0
RS FIELD 552A
ROUND 552A.1
SAE FIELD 556
ROUND OPERATION FIELD 558
ROUND CONTROL FIELD 554A
MOD FIELD 642
11
DATA TRANSFORM 552A.2
DATA TRANSFORM FIELD 554B
00 OR 01 OR 10
562A
EVICTION HINT FIELD 552B
EH
SIB
D D D D
650
562B
DATA MANIPULATION FIELD 554C
U=1
WRITE MASK CONTROL FIELD 552C
MERGING
ZEROING
RL FIELD 557A
ROUND 557A.1
ROUND OPERATION FIELD 559A
VSIZE 557A.2
VECTOR LENGTH FIELD 559B
B
BROADCAST FIELD 557B

REGISTER ARCHITECTURE 700
GENERAL PURPOSE REGISTERS 725
16 X 64 BITS
VECTOR REGISTERS 710
512 BITS
zmm0
ymm0
xmm0
ymm15
xmm15
128 BITS
256 BITS
zmm31
SCALAR FP STACK REGISTER FILE 745
(X87FP)
80 BITS
0
ALIASED
7
64 BITS
MMX PACKED INT FLAT
REGISTER FILE 750
WRITE MASK REGISTERS 715
64 BITS
k0
k7

FIG. 7

PIPELINE 800
FIG. 8A
FETCH 802
LENGTH DECODING 804
DECODE 806
ALLOC. 808
RENAMING 810
SCHEDULE 812
REGISTER READ/ MEMORY READ 814
EXECUTE STAGE 816
WRITE BACK/ MEMORY WRITE 818
EXCEPTION HANDLING 822
COMMIT 824
CORE 890
BRANCH PREDICTION UNIT 832
INSTRUCTION CACHE UNIT 834
INSTRUCTION TLB UNIT 836
INSTRUCTION FETCH 838
DECODE UNIT 840
FRONT END UNIT 830
EXECUTION ENGINE UNIT 850
RENAME / ALLOCATOR UNIT 852
RETIREMENT UNIT 854
SCHEDULER UNIT(S) 856
PHYSICAL REGISTER FILES UNIT(S) 858
EXECUTION UNIT(S) 862
MEMORY ACCESS UNIT(S) 864
EXECUTION CLUSTER(S) 860
MEMORY UNIT 870
DATA TLB UNIT 872
DATA CACHE UNIT 874
L2 CACHE UNIT 876
FIG. 8B

WRITE MASK REGISTERS
926
16-WIDE VECTOR ALU
928
SWIZZLE
920
REPLICATE
924
VECTOR
REGISTERS
914
NUMERIC
CONVERT
922B
NUMERIC
CONVERT
922A
L1 DATA CACHE
906A

FIG. 9B

INSTRUCTION DECODE
900
VECTOR
UNIT
910
SCALAR
UNIT
908
VECTOR
REGISTERS
914
SCALAR
REGISTERS
912
L1 CACHE
906
LOCAL SUBSET OF THE L2 CACHE
904
RING NETWORK
902

FIG. 9A

PROCESSOR 1000
SPECIAL PURPOSE LOGIC 1008
CORE 1002A
CACHE UNIT(S) 1004A
CORE 1002N
CACHE UNIT(S) 1004N
SHARED CACHE UNIT(S) 1006
RING 1012
SYSTEM AGENT UNIT 1010
INTEGRATED MEMORY CONTROLLER UNIT(S) 1014
BUS CONTROLLER UNIT(S) 1016

FIG. 10

1100
1115
1110
PROCESSOR
1195
1145
1140
CONTROLLER HUB 1120
MEMORY
CO-PROCESSOR
GMCH 1190
SPECULATION MANAGER CODE 1140A
1160
I/O
IOH 1150

FIG. 11

1200
PROCESSOR
PROCESSOR/
COPROCESSOR
MEMORY
1232
IMC
1272
IMC
1282
MEMORY
1234
1276
1278
1250
1288
1286
1270
P-P
P-P
P-P
P-P
1280
1252
1294
1254
COPROCESSOR
1238
1239
P-P
CHIPSET 1290
P-P
1298
I/F
1292
I/F
1296
1216
BUS BRIDGE
1218
I/O DEVICES
1214
AUDIO I/O
1224
PROCESSOR
1215
1220
KEYBOARD/
MOUSE
1222
COMM
DEVICES
1227
DATA STORAGE
1230
CODE AND
DATA
1228

FIG. 12

MEMORY
1234
I/O DEVICES
1314
CL
1282
PROCESSOR
1280
1286
1288
P-P
P-P
1254
1298
P-P
1290
CHIPSET
1296
I/F
1294
1250
PROCESSOR
P-P
1278
1252
P-P
P-P
1276
1272
CL
1270
LEGACY I/O
1315
1300
MEMORY
1232

FIG. 13

SYSTEM ON A CHIP 1400
APPLICATION PROCESSOR 1410
CORE 1002A
CACHE UNIT(S) 1004A
CORE 1002N
CACHE UNIT(S) 1004N
SHARED CACHE UNIT(S) 1006
SYSTEM AGENT UNIT 1010
BUS CONTROLLER UNIT(S) 1016
INTERCONNECT UNIT(S) 1402
COPROCESSOR(S) 1420
INTEGRATED MEMORY CONTROLLER UNIT(S) 1014
SRAM UNIT 1430
DMA UNIT 1432
DISPLAY UNIT 1440

FIG. 14

PROCESSOR WITHOUT AN X86 INSTRUCTION SET CORE 1514
PROCESSOR WITH AT LEAST ONE X86 INSTRUCTION SET CORE 1516
HARDWARE
SOFTWARE
ALTERNATIVE INSTRUCTION SET BINARY CODE 1510
INSTRUCTION CONVERTER 1512
X86 BINARY CODE 1506
ALTERNATIVE INSTRUCTION SET COMPILER 1508
X86 COMPILER 1504
HIGH LEVEL LANGUAGE 1502

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019140274 A1
- US 2016132337 A1


### Non-patent literature cited in the description


- IA-32 Architectures Software Developer's Manual. November 2018
- *Intel® Architecture Instruction Set Extensions Programming Reference*, October 2018